# EUROPEAN PATENT APPLICATION

(11) **EP 4 462 849 A1**
(43) Date of publication of application: **13.11.2024**
(21) Application number: 23746446.6
(22) Date of filing: 29.01.2023
(51) Int. Cl.: H04W 24/02

(54) **WIRELESS COMMUNICATION METHOD AND APPARATUS**

(30) Priority: 30.01.2022 CN 202210114744
(71) Applicant: Huawei Technologies Co., Ltd., Shenzhen, Guangdong 518129 (CN)
(72) Inventor: YING, Jiangwei, Shenzhen, Guangdong 518129 (CN); YANG, Yanmei, Shenzhen, Guangdong 518129 (CN)
(74) Representative: Gill Jennings & Every LLP
(86) International application number: PCT/CN2023/073706
(87) International publication number: WO 2023/143569

(57) **Abstract**

This application provides a wireless communication method. The method includes: A sensing network element obtains sensing data (S301). The sensing network element obtains first feature information of a first terminal device (S302). The sensing network element obtains first identifier information of the first terminal device (S303). The sensing network element determines, based on the sensing data, the first feature information, and the first identifier information, that a target terminal device in the sensing data is the first terminal device (S304). In this way, according to the method, a sensing system can support more sensing applications.

## Description

This application claims priority to Chinese Patent Application No. 202210114744.0, filed with the China National Intellectual Property Administration on January 30, 2022 and entitled "WIRELESS COMMUNICATION METHOD AND APPARATUS", which is incorporated herein by reference in its entirety.

### TECHNICAL FIELD

This application relates to the field of communication technologies, and more specifically, to a wireless communication method and an apparatus.

### BACKGROUND

With the update of mobile communication technologies, a communication network will be constructed in a flexible, efficient, and multi-functional manner. Currently, in scenarios such as autonomous driving, security supervision, a smart home, and a smart terminal, a sensing capability brought by a millimeter-wave band owned by a base station and/or a terminal may be used to perform sensing identification on an area, an object, a terminal, or an event.

However, sensing data generated by the base station and/or the terminal by performing the sensing identification can describe only parameters such as an appearance, a location, or a speed of an object, and cannot identify identifier information of a terminal device corresponding to the object. In this case, in a sensing system, a sensed object and identifier information of a terminal device corresponding to the sensed object cannot be provided to a sensing requester, and communication with the terminal device corresponding to the object based on the identifier information of the terminal device cannot be performed. This limits application of the sensing system. Therefore, there is a need to explore a method for obtaining identifier information of an object in the sensing data, to enable the sensing system to support more sensing applications.

### SUMMARY

This application provides a wireless communication method, to obtain identifier information of an object in sensing data, to enable a sensing system to support more sensing applications.

According to a first aspect, a wireless communication method is provided. The method may be performed by a sensing network element or a chip in the sensing network element. The method includes: The sensing network element obtains sensing data. The sensing network element obtains first feature information of a first terminal device. The sensing network element obtains first identifier information of the first terminal device. The sensing network element determines, based on the sensing data, the first feature information, and the first identifier information, that a target terminal device in the sensing data is the first terminal device.

Alternatively, the method includes: A sensing network element obtains sensing data. The sensing network element obtains first identifier information of a first terminal device. The sensing network element obtains first feature information corresponding to the first identifier information. The sensing network element determines, based on the sensing data and the first feature information, that a target terminal device in the sensing data is the first terminal device.

Optionally, the sensing network element includes a control unit and a calculation unit, and the method may be performed by the control unit and the calculation unit. The control unit and the calculation unit may be deployed together, or may be deployed separately.

In this way, in this application, the sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that target identifier information of the target terminal device is the identifier information corresponding to the feature information. In other words, terminal device identity information of a sensed object is obtained. This increases a sensing dimension of the sensing system, and can enable the sensing system to support more sensing applications.

Optionally, the sensing network element includes a control unit and a calculation unit, and the method may be performed by the control unit and the calculation unit. The control unit and the calculation unit may be deployed together, or may be deployed separately.

In this way, in this application, the sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that target identifier information of the target terminal device is the identifier information corresponding to the feature information. In other words, terminal device identity information of a sensed object is obtained. This increases a sensing dimension of the sensing system, and can enable the sensing system to support more sensing applications.

With reference to the first aspect, in some implementations of the first aspect, the first feature information is used to match the first terminal device.

In this way, in this application, the first feature information may be used to associate the first terminal device, so that it can be determined that the first terminal device is the target terminal device. This can enable the sensing system to support more sensing applications.

With reference to the first aspect, in some implementations of the first aspect, the first feature information is location information of the first terminal device, and that the sensing network element obtains first feature information includes: The sensing network element receives the location information from a positioning network element.

In this way, in this application, the location information may be used as the first feature information, and the location information is obtained from the positioning network element. This can enable the sensing system to support more sensing applications.

With reference to the first aspect, in some implementations of the first aspect, before that the sensing network element receives the location information from a positioning network element, the method further includes: The sensing network element sends a first location request message to the positioning network element, where the first location request message includes the first identifier information of the first terminal device. Alternatively, the sensing network element sends a first location request message to the positioning network element, where the first location request message includes first area information, and the first area information corresponds to the target terminal device. Alternatively, the sensing network element sends a first location request message to the positioning network element, where the first location request message includes area identifier information corresponding to first area information, and the area identifier information includes at least one of the following information: a tracking area TA identifier corresponding to the first area information, an access network identifier corresponding to the first area information, a cell identifier corresponding to the first area information, and an access and mobility management function AMF network element identifier corresponding to the first area information.

In this way, in this application, the sensing network element may send the first location request message to the positioning network element, to obtain the location information. This can enable the sensing system to support more sensing applications.

With reference to the first aspect, in some implementations of the first aspect, that the sensing network element obtains the first identifier information includes: The sensing network element receives the first identifier information of the first terminal device from a first network element.

With reference to the first aspect, in some implementations of the first aspect, before that the sensing network element receives the first identifier information from a first network element, the method further includes: The sensing network element sends a first identifier request message to the first network element, where the first identifier request message includes the first area information or the area identifier information.

In this way, in this application, the sensing network element may send the first identifier request message to the first network element, to obtain the first identifier information. This can enable the sensing system to support more sensing applications.

With reference to the first aspect, in some implementations of the first aspect, before that the sensing network element receives the first identifier information from a first network element, the method further includes: The sensing network element sends first trigger information to the first network element, where the first trigger information is used to obtain the first identifier information.

With reference to the first aspect, in some implementations of the first aspect, the first trigger information includes at least one of the following information: a type of the target terminal device, a service type of the target terminal device, and a trigger condition of the target terminal device.

In other words, the first trigger information includes at least one of the following information: device type information, service type information, and trigger condition information. The device type information indicates a type of a terminal device whose identifier information needs to be obtained. The service type information indicates a service type of the terminal device whose identifier information needs to be obtained. The trigger condition information indicates a trigger condition met by the terminal device whose identifier information needs to be obtained.

In this way, in this application, the first network element may alternatively determine, based on a type or a trigger condition that is of a terminal device and that is sent by the sensing network element, specific terminal devices that are needed to be first terminal devices whose first identifier information needs to be obtained.

With reference to the first aspect, in some implementations of the first aspect, the first feature information is location information of the first terminal device, that the sensing network element obtains first feature information and that the sensing network element obtains first identifier information include: The sensing network element receives the location information and the first identifier information from a first network element.

With reference to the first aspect, in some implementations of the first aspect, before that the sensing network element receives the location information and the first identifier information from a first network element, the method further includes: The sensing network element sends a second location request message to the first network element, where the second location request message includes first area information, and the first area information corresponds to the target terminal device. Alternatively, the sensing network element sends a second location request message to the first network element, where the second location request message includes area identifier information corresponding to first area information, and the area identifier information includes at least one of the following information: a tracking area TA identifier corresponding to the first area information, an access network identifier corresponding to the first area information, and a cell identifier corresponding to the first area information.

In this way, in this application, the sensing network element may send the second location request message to the first network element, to obtain the location information. This can enable the sensing system to support more sensing applications.

With reference to the first aspect, in some implementations of the first aspect, before that the sensing network element receives the location information and the first identifier information from a first network element, the method further includes: The sensing network element sends second trigger information to a second network element, where the second trigger information is used to obtain the first identifier information and the location information.

With reference to the first aspect, in some implementations of the first aspect, the second trigger information includes at least one of the following information: a type of the target terminal device, a service type of the target terminal device, and a trigger condition of the target terminal device.

In this way, in this application, the first network element may determine, based on a type or a trigger condition that is of a terminal device and that is indicated by the second trigger information, the first terminal device that needs to return the location information and the first identifier information.

With reference to the first aspect, in some implementations of the first aspect, the method further includes: The sensing network element receives first information from a second network element. The sensing network element obtains first identifier information of the target terminal device in the sensing data based on the first information. The sensing network element sends the sensing data and the first identifier information of the target terminal device to the second network element.

With reference to the first aspect, in some implementations of the first aspect, the first information further includes at least one of the following information: the device type of the target terminal device, the service type of the target terminal device, the trigger condition of the target terminal device, and the first area information.

In other words, the first information includes at least one of the following information: device type information, service type information, trigger condition information, and the first area information. The device type information indicates a type of a terminal device whose identifier information needs to be obtained. The service type information indicates a service type of the terminal device whose identifier information needs to be obtained. The trigger condition information indicates a trigger condition met by the terminal device whose identifier information needs to be obtained.

In this way, in this application, the sensing network element may determine, based on the first information, a target terminal device that is in at least one first terminal device and whose identifier information needs to be obtained. Alternatively, the sensing network element may determine, based on the first information, that identifier information of a terminal device corresponding to a sensed object in the sensing data needs to be identified. The sensing network element may determine the target terminal device based on the device type, the service type, or the trigger condition, to improve communication flexibility of the sensing system.

With reference to the first aspect, in some implementations of the first aspect, the method further includes: The sensing network element receives second information from the second network element, where the second information indicates the sensing network element to determine the target terminal device.

With reference to the first aspect, in some implementations of the first aspect, the first feature information includes at least one of the following information: location information of the first terminal device, first speed information of the first terminal device, a first movement direction of the first terminal device, a first movement track of the first terminal device, and first appearance information of the first terminal device.

In this way, in this application, the sensing network element may obtain a plurality of types of first feature information to determine that the first terminal device is the target terminal device. This improves accuracy of identifying the sensed object by the sensing system and accuracy of obtaining terminal device identity information of the sensed object, so that the sensing system can support more sensing applications.

With reference to the first aspect, in some implementations of the first aspect, that the sensing network element determines, based on the sensing data, the first feature information, and the first identifier information, that a target terminal device in the sensing data is the first terminal device includes: The sensing network element determines target feature information of the target terminal device based on the sensing data. When the target feature information matches the first feature information, the sensing network element determines that the first terminal device is the target terminal device.

With reference to the first aspect, in some implementations of the first aspect, a first area is an area corresponding to the sensing data. Alternatively, the sensing data includes sensing data obtained by performing sensing detection on a first area.

With reference to the first aspect, in some implementations of the first aspect, the method further includes: The sensing network element determines the first area based on the target terminal device or a trigger event in the sensing data.

In this way, in this application, the sensing network element may determine different first areas, then obtain the location information and the first identifier information of the first terminal device in the first area, and finally obtain the first identifier information of the target terminal device in the sensing data (corresponding to the first area) or first identifier information of a target terminal device involved in the trigger event. This improves sensing flexibility of the sensing system, and enables the sensing system to support more sensing applications.

With reference to the first aspect, in some implementations of the first aspect, the first network element is an access and mobility management function network element, and the positioning network element is a gateway mobile location center GMLC network element or a location management function LMF network element.

According to a second aspect, a wireless communication method is provided. The method may be performed by a positioning network element or a chip in the positioning network element. The method includes: The positioning network element determines location information of a first terminal device. The positioning network element sends the location information, where the location information is used to determine that the first terminal device is a target terminal device in sensing data. In other words, the location information is used to determine that the target terminal device in the sensing data is the first terminal device.

In this way, in this application, a sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that target identifier information of the target terminal device is the identifier information corresponding to the feature information. In other words, terminal device identity information of a sensed object is obtained. This increases a sensing dimension of a sensing system, and can enable the sensing system to support more sensing applications.

With reference to the second aspect, in some implementations of the second aspect, before that the positioning network element determines location information, the method further includes: The positioning network element receives a first location request message from a sensing network element, where the first location request message includes first identifier information of the first terminal device. Alternatively, the positioning network element receives a first location request message from a sensing network element, where the first location request message includes first area information, and the first area information corresponds to the target terminal device. Alternatively, the positioning network element receives a first location request message from a sensing network element, where the first location request message includes area identifier information corresponding to first area information, and the area identifier information includes at least one of the following information: a tracking area TA identifier corresponding to the first area information, an access network identifier corresponding to the first area information, a cell identifier corresponding to the first area information, and an access and mobility management function AMF network element identifier corresponding to the first area information.

With reference to the second aspect, in some implementations of the second aspect, when the positioning network element receives the first location request message from the sensing network element and the first location request message includes the first area information, or when the positioning network element receives the first location request message from the sensing network element and the first location request message includes the area identifier information, the method further includes: The positioning network element sends a second identifier request message to a first network element based on the first location request message, where the second identifier request message includes the first area information. Alternatively, the positioning network element sends a second identifier request message to a first network element based on the first location request message, where the second identifier request message includes the area identifier information. The positioning network element receives the first identifier information from the first network element. The positioning network element determines the location information based on the first identifier information.

With reference to the second aspect, in some implementations of the second aspect, before that the positioning network element determines location information, the method further includes: The positioning network element receives a first location request message from a first network element, where the first location request message includes first identifier information of the first terminal device. The positioning network element determines the location information based on the first identifier information.

According to a third aspect, a wireless communication method is provided. The method may be performed by a first network element or a chip in the first network element. The method includes: The first network element determines first identifier information of a first terminal device. The first network element sends the first identifier information, where the first identifier information is used to determine that the first terminal device is a target terminal device in sensing data. In other words, the first identifier information is used to determine that the target terminal device in the sensing data is the first terminal device. In other words, the first identifier information is used to determine that a target terminal device corresponding to a sensed object in the sensing data is the first terminal device.

In this way, in this application, a sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that target identifier information of the target terminal device is the identifier information corresponding to the feature information. In other words, terminal device identity information of a sensed object is obtained. This increases a sensing dimension of a sensing system, and can enable the sensing system to support more sensing applications.

With reference to the third aspect, in some implementations of the third aspect, before that the first network element determines first identifier information, the method further includes: The first network element receives a first identifier request message from a sensing network element, where the first identifier request message includes first area information, and the first area information corresponds to the target terminal device. Alternatively, the first network element receives a first identifier request message from a sensing network element, where the first identifier request message includes area identifier information corresponding to first area information, and the area identifier information includes at least one of the following information: a tracking area TA identifier corresponding to the first area information, an access network identifier corresponding to the first area information, a cell identifier corresponding to the first area information, and an access and mobility management AMF network element identifier.

With reference to the third aspect, in some implementations of the third aspect, before that the first network element determines first identifier information, the method further includes: The first network element receives first trigger information from the sensing network element, where the first trigger information is used to obtain the first identifier information.

With reference to the third aspect, in some implementations of the third aspect, the first trigger information includes at least one of the following information: a device type of the target terminal device, a service type of the target terminal device, and a trigger condition of the target terminal device.

With reference to the third aspect, in some implementations of the third aspect, before that the first network element determines first identifier information, the method further includes: The first network element receives a second location request message from a sensing network element, where the second location request message includes first area information, and the first area information corresponds to the target terminal device. Alternatively, the first network element receives a second location request message from a sensing network element, where the second location request message includes area identifier information corresponding to first area information, and the area identifier information includes at least one of the following information: a tracking area TA identifier corresponding to the first area information, an access network identifier corresponding to the first area information, and a cell identifier corresponding to the first area information.

With reference to the third aspect, in some implementations of the third aspect, before that the first network element determines first identifier information, the method further includes: The first network element receives second trigger information from the sensing network element, where the second trigger information is used to obtain the first identifier information and location information.

With reference to the third aspect, in some implementations of the third aspect, the second trigger information includes at least one of the following information: a type of the target terminal device, a service type of the target terminal device, and a trigger condition of the target terminal device.

With reference to the third aspect, in some implementations of the third aspect, the method further includes: The first network element sends a third location request message to a positioning network element, where the third location request message includes the first identifier information. The first network element receives the location information of the first terminal device from the positioning network element. The first network element sends the location information to the sensing network element.

According to a fourth aspect, a sensing network element is provided. The sensing network element includes an obtaining unit and a processing unit. The obtaining unit is configured to obtain sensing data, is further configured to obtain first feature information of a first terminal device, and is further configured to obtain first identifier information of the first terminal device. The processing unit is configured to determine, based on the sensing data, the first feature information, and the first identifier information, that a target terminal device in the sensing data is the first terminal device.

In this way, in this application, the sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that target identifier information of the target terminal device is the identifier information corresponding to the feature information. In other words, terminal device identity information of a sensed object is obtained. This increases a sensing dimension of a sensing system, and can enable the sensing system to support more sensing applications.

With reference to the fourth aspect, in some implementations of the fourth aspect, the first feature information is used to match the first terminal device.

With reference to the fourth aspect, in some implementations of the fourth aspect, the first feature information is location information of the first terminal device, and that the obtaining unit is configured to obtain first feature information includes: The obtaining unit is specifically configured to receive the location information from a positioning network element.

With reference to the fourth aspect, in some implementations of the fourth aspect, before the obtaining unit is specifically configured to receive the location information from the positioning network element, the obtaining unit is further configured to send a first location request message to the positioning network element, where the first location request message includes the first identifier information of the first terminal device. Alternatively, the obtaining unit is further configured to send a first location request message to the positioning network element, where the first location request message includes first area information, and the first area information corresponds to the target terminal device. Alternatively, the obtaining unit is further configured to send a first location request message to the positioning network element, where the first location request message includes area identifier information corresponding to first area information, and the area identifier information includes at least one of the following information: a tracking area TA identifier corresponding to the first area information, an access network identifier corresponding to the first area information, a cell identifier corresponding to the first area information, and an access and mobility management function AMF network element identifier corresponding to the first area information.

With reference to the fourth aspect, in some implementations of the fourth aspect, when the obtaining unit is configured to send the first location request message to the positioning network element and the first location request message includes the first identifier information, the obtaining unit is specifically configured to receive the first identifier information from a first network element.

With reference to the fourth aspect, in some implementations of the fourth aspect, before the obtaining unit is configured to receive the first identifier information from the first network element, the obtaining unit is further configured to send a first identifier request message to the first network element, where the first identifier request message includes the first area information. Alternatively, the obtaining unit is further configured to send a first identifier request message to the first network element, where the first identifier request message includes the area identifier information.

With reference to the fourth aspect, in some implementations of the fourth aspect, before the obtaining unit is configured to receive the first identifier information from the first network element, the obtaining unit is further configured to send first trigger information to the first network element, where the first trigger information is used to obtain the first identifier information.

With reference to the fourth aspect, in some implementations of the fourth aspect, the first trigger information includes at least one of the following information: a device type of the target terminal device, a service type of the target terminal device, and a trigger condition of the target terminal device.

With reference to the fourth aspect, in some implementations of the fourth aspect, the first feature information is location information of the first terminal device. The obtaining unit is specifically configured to receive the location information from a first network element. The obtaining unit is specifically configured to receive the first identifier information from the first network element.

With reference to the fourth aspect, in some implementations of the fourth aspect, before the obtaining unit is configured to receive the first identifier information from the first network element, and before the obtaining unit is configured to receive the location information from the first network element, the obtaining unit is further configured to send a second location request message to the first network element, where the second location request message includes first area information, and the first area information corresponds to the target terminal device. Alternatively, the obtaining unit is further configured to send a second location request message to the first network element, where the second location request message includes area identifier information corresponding to first area information, and the area identifier information includes at least one of the following information: a TA identifier corresponding to the first area information, an access network identifier corresponding to the first area information, and a cell identifier corresponding to the first area information.

With reference to the fourth aspect, in some implementations of the fourth aspect, before the obtaining unit is configured to receive the first identifier information from the first network element, and before the obtaining unit is configured to receive the location information from the first network element, the obtaining unit is further configured to send second trigger information to a second network element, where the second trigger information is used to obtain the first identifier information and the location information.

With reference to the fourth aspect, in some implementations of the fourth aspect, the second trigger information includes at least one of the following information: a type of the target terminal device, a service type of the target terminal device, and a trigger condition of the target terminal device.

With reference to the fourth aspect, in some implementations of the fourth aspect, the sensing data includes sensing data of a first area, and the first area is an area indicated by the first area information.

With reference to the fourth aspect, in some implementations of the fourth aspect, the obtaining unit is further configured to receive first information from a second network element. The obtaining unit is further configured to obtain first identifier information of the target terminal device in the sensing data based on the first information. The obtaining unit is further configured to send the sensing data and the first identifier information of the target terminal device to the second network element.

With reference to the fourth aspect, in some implementations of the fourth aspect, the first information further includes at least one of the following information: the device type of the target terminal device, the service type of the target terminal device, the trigger condition of the terminal device, and the first area information.

With reference to the fourth aspect, in some implementations of the fourth aspect, the obtaining unit is further configured to receive second information from the second network element, where the second information indicates the sensing network element to determine the target terminal device.

With reference to the fourth aspect, in some implementations of the fourth aspect, the first feature information includes at least one of the following information: location information of the first terminal device, first speed information of the first terminal device, a first movement direction of the first terminal device, a first movement track of the first terminal device, and first appearance information of the first terminal device.

With reference to the fourth aspect, in some implementations of the fourth aspect, the processing unit is specifically configured to determine target feature information of the target terminal device based on the sensing data. When the target feature information matches the first feature information, the processing unit is specifically configured to determine that the first terminal device is the target terminal device.

With reference to the fourth aspect, in some implementations of the fourth aspect, the first area is an area corresponding to the sensing data.

With reference to the fourth aspect, in some implementations of the fourth aspect, the processing unit is further configured to determine the first area based on the target terminal device in the sensing data.

With reference to the fourth aspect, in some implementations of the fourth aspect, the first network element is an access and mobility management function AMF network element, and the positioning network element is a gateway mobile location center GMLC network element or a location management function LMF network element.

According to a fifth aspect, a positioning network element is provided. The positioning network element includes a processing unit and a transceiver unit. The processing unit is configured to determine location information of a first terminal device. The transceiver unit is configured to send the location information, where the location information is used to determine that the first terminal device is a target terminal device in sensing data. In other words, the location information is used to determine that the target terminal device in the sensing data is the first terminal device.

In this way, in this application, a sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that target identifier information of the target terminal device is the identifier information corresponding to the feature information. In other words, terminal device identity information of a sensed object is obtained. This increases a sensing dimension of a sensing system, and can enable the sensing system to support more sensing applications.

With reference to the fifth aspect, in some implementations of the fifth aspect, before the processing unit is configured to determine the location information of the first terminal device, the transceiver unit is further configured to receive a first location request message from a sensing network element, where the first location request message includes first identifier information of the first terminal device. Alternatively, the transceiver unit is further configured to receive a first location request message from a sensing network element, where the first location request message includes first area information, and the first area information corresponds to the target terminal device. Alternatively, the transceiver unit is further configured to receive a first location request message from a sensing network element, where the first location request message includes area identifier information corresponding to first area information, and the area identifier information includes at least one of the following information: a tracking area TA identifier corresponding to the first area information, an access network identifier corresponding to the first area information, a cell identifier corresponding to the first area information, and an access and mobility management function AMF network element identifier corresponding to the first area information.

With reference to the fifth aspect, in some implementations of the fifth aspect, when the transceiver unit is configured to receive the first location request message from the sensing network element and the first location request message includes the first area information, or when the transceiver unit is configured to receive the first location request message from the sensing network element and the first location request message includes the area identifier information, the transceiver unit is further configured to send a second identifier request message to a first network element based on the first location request message, where the second identifier request message includes the first area information. Alternatively, the transceiver unit is further configured to send a second identifier request message to a first network element based on the first location request message, where the second identifier request message includes the area identifier information. The transceiver unit is further configured to receive the first identifier information from the first network element. The processing unit is configured to determine the location information based on the first identifier information.

With reference to the fifth aspect, in some implementations of the fifth aspect, before the processing unit is configured to determine the location information of the first terminal device, the transceiver unit is further configured to receive a first location request message from a first network element, where the first location request message includes first identifier information of the first terminal device. The processing unit is specifically configured to obtain the location information based on the first identifier information.

According to a sixth aspect, a first network element is provided. The first network element includes a processing unit and a transceiver unit. The processing unit is configured to determine first identifier information of a first terminal device. The transceiver unit is configured to send the first identifier information, where the first identifier information is used to determine that the first terminal device is a target terminal device in sensing data. In other words, the first identifier information is used to determine that the target terminal device in the sensing data is the first terminal device.

In this way, in this application, a sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that target identifier information of the target terminal device is the identifier information corresponding to the feature information. In other words, terminal device identity information of a sensed object is obtained. This increases a sensing dimension of a sensing system, and can enable the sensing system to support more sensing applications.

With reference to the sixth aspect, in some implementations of the sixth aspect, before the processing unit is configured to determine the first identifier information, the transceiver unit is further configured to receive a first identifier request message from a sensing network element, where the first identifier request message includes first area information, and the first area information corresponds to the target terminal device. Alternatively, the transceiver unit is further configured to receive a first identifier request message from a sensing network element, where the first identifier request message includes area identifier information corresponding to the first area information, and the area identifier information includes at least one of the following information: a tracking area TA identifier corresponding to the first area information, an access network identifier corresponding to the first area information, a cell identifier corresponding to the first area information, and an access and mobility management function AMF identifier.

With reference to the sixth aspect, in some implementations of the sixth aspect, before the processing unit is further configured to determine the first identifier information, the transceiver unit is further configured to receive first trigger information from the sensing network element, where the first trigger information is used to obtain the first identifier information.

With reference to the sixth aspect, in some implementations of the sixth aspect, the first trigger information includes at least one of the following information: a device type of the target terminal device, a service type of the target terminal device, and a trigger condition of the target terminal device.

With reference to the sixth aspect, in some implementations of the sixth aspect, before the processing unit is configured to determine the first identifier information, the transceiver unit is configured to receive a second location request message from a sensing network element, where the second location request message includes first area information, and the first area information corresponds to the target terminal device. Alternatively, the transceiver unit is configured to receive a second location request message from a sensing network element, where the second location request message includes area identifier information corresponding to first area information, and the area identifier information includes at least one of the following information: a tracking area TA identifier corresponding to the first area information, an access network identifier corresponding to the first area information, and a cell identifier corresponding to the first area information.

With reference to the sixth aspect, in some implementations of the sixth aspect, before the processing unit is configured to determine the first identifier information, the transceiver unit is further configured to receive second trigger information from the sensing network element, where the second trigger information is used to obtain the first identifier information and location information.

With reference to the sixth aspect, in some implementations of the sixth aspect, the second trigger information includes at least one of the following information: a type of the target terminal device, a service type of the target terminal device, and a trigger condition of the target terminal device.

With reference to the sixth aspect, in some implementations of the sixth aspect, the transceiver unit is further configured to send a third location request message to a positioning network element, where the third location request message includes the first identifier information. The transceiver unit is further configured to receive the location information of the first terminal device from the positioning network element. The transceiver unit is further configured to send the location information to the sensing network element.

According to a seventh aspect, a wireless communication apparatus is provided. The apparatus may include a processing unit and an obtaining unit. Optionally, the obtaining unit may be a transceiver unit or an integration of a transceiver unit and a processing unit.

When the apparatus is a sensing network element, the processing unit may be a processor, and the obtaining unit may be a transceiver or an integration of a transceiver and a processor. The apparatus may further include a storage unit, and the storage unit may be a memory. The storage unit is configured to store instructions, and the processing unit executes the instructions stored in the storage unit, to enable the sensing network element to perform any method in the first aspect to the third aspect. When the apparatus is a chip in the sensing network element, the processing unit may be a processor, and the obtaining unit may be an input/output interface, a pin, a circuit, or the like. The processing unit executes instructions stored in a storage unit, to enable the chip to perform a method in the first aspect to the third aspect. The storage unit is configured to store instructions. The storage unit may be a storage unit in the chip (for example, a register or a cache), or may be a storage unit located outside the chip in the sensing network element (for example, a read-only memory or a random access memory).

According to an eighth aspect, a wireless communication apparatus is provided. The apparatus may include a processing unit, a sending unit, and a receiving unit. Optionally, the sending unit and the receiving unit may alternatively be a transceiver unit.

When the apparatus is a first network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the first network element to perform any method in the first aspect to the third aspect. When the apparatus is a chip in the first network element, the processing unit may be a processor, and the sending unit and the receiving unit may be an input/output interface, a pin, a circuit, or the like. The processing unit executes instructions stored in a storage unit, to enable the chip to perform a method in the first aspect to the third aspect. The storage unit is configured to store instructions. The storage unit may be a storage unit in the chip (for example, a register or a cache), or may be a storage unit located outside the chip in the first network element (for example, a read-only memory or a random access memory).

When the apparatus is a positioning network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the positioning network element to perform any method in the first aspect to the third aspect. When the apparatus is a chip in the positioning network element, the processing unit may be a processor, and the sending unit and the receiving unit may be an input/output interface, a pin, a circuit, or the like. The processing unit executes instructions stored in a storage unit, to enable the chip to perform a method in the first aspect to the third aspect. The storage unit is configured to store instructions. The storage unit may be a storage unit in the chip (for example, a register or a cache), or may be a storage unit located outside the chip in the positioning network element (for example, a read-only memory or a random access memory).

According to a ninth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement any method in the first aspect to the third aspect by using a logic circuit or executing code instructions.

According to a tenth aspect, a computer-readable storage medium is provided. The computer-readable storage medium stores a computer program or instructions. When the computer program or the instructions are executed, any method in the first aspect to the third aspect is implemented.

According to an eleventh aspect, a computer program product including instructions is provided. When the instructions are run, any method in the first aspect to the third aspect is implemented.

According to a twelfth aspect, a computer program is provided. The computer program includes code or instructions. When the code or the instructions are run, the method in any one of the possible implementations of the first aspect to the third aspect is implemented.

According to a thirteenth aspect, a chip system is provided. The chip system includes a processor, and may further include a memory, configured to implement at least one method described in the first aspect to the third aspect. The chip system may include a chip, or may include a chip and another discrete component.

According to a fourteenth aspect, a communication system is provided. The system includes the apparatus (for example, the sensing network element, the first network element, and the positioning network element) according to any one of the fourth aspect to the sixth aspect.

In some implementations, the first network element may be an access and mobility management function network element.

In some implementations, the positioning network element may be a gateway mobile location center network element or a location function management network element.

In some implementations, the system further includes a second network element, and the second network element is a network capability exposure function network element or an access stratum.

### BRIEF DESCRIPTION OF DRAWINGS

FIG. 1 is a diagram of a wireless communication system according to an embodiment of this application;
FIG. 2 is a diagram of another wireless communication system according to an embodiment of this application;
FIG. 3 is a schematic flowchart of a wireless communication method according to an embodiment of this application;
FIG. 4 is a diagram of matching between target location information and first location information according to an embodiment of this application;
FIG. 5 is a schematic flowchart of another wireless communication method according to an embodiment of this application;
FIG. 6 is a schematic flowchart of still another wireless communication method according to an embodiment of this application;
FIG. 7 is a schematic flowchart of yet another wireless communication method according to an embodiment of this application;
FIG. 8 is a schematic flowchart of yet another wireless communication method according to an embodiment of this application; and
FIG. 9 to FIG. 11 each are a diagram of a structure of a possible communication apparatus according to an embodiment of this application.

### DESCRIPTION OF EMBODIMENTS

The following describes technical solutions in this application with reference to the accompanying drawings.

Terminologies such as "component", "module", and "system" used in this application indicate computer-related entities, hardware, firmware, combinations of hardware and software, software, or software being executed. For example, a component may be, but is not limited to, a process that is run on a processor, a processor, a target, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from the foregoing various computer-readable media that store various data structures. For example, the components may communicate by using a local and/or remote process based on a signal having one or more data packets (for example, data from two components interacting with another component in a local system, a distributed system, and/or across a network such as the Internet interacting with another system by using the signal).

The method in embodiments of this application may be applied to a long term evolution (long term evolution, LTE) system, a long term evolution-advanced (long term evolution-advanced, LTE-A) system, an enhanced long term evolution-advanced (enhanced long term evolution-advanced, eLTE) system, a 5th generation (5th Generation, 5G) mobile communication system, and a new radio (New Radio, NR) system, and the method may also be extended to similar wireless communication systems, for example, wireless fidelity (wireless fidelity, Wi-Fi), worldwide interoperability for microwave access (worldwide interoperability for microwave access, WiMAX), and a cellular system related to a 3rd generation partnership project (3rd generation partnership project, 3gpp).

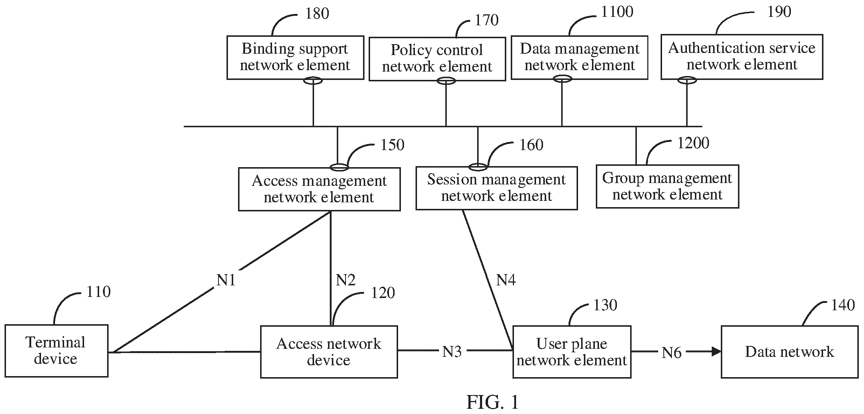

With the update of mobile communication technologies, a 5G network will be constructed in a flexible and efficient manner. The 5G network may use a communication sensing capability as a new capability. For example, a system architecture of the 5G network may be shown in FIG. 1.

FIG. 1 is a network architecture used in an embodiment of this application. Network elements that may be related in the network architecture are separately described.
1. Terminal device 110: The terminal device 110 may include various handheld devices, in-vehicle devices, wearable devices, and computing devices that have a wireless communication function, or other processing devices connected to a wireless modem, and various forms of terminals, mobile stations (mobile stations, MSs), terminals (terminals), user equipments (user equipments, UEs), soft clients, and the like, for example, a water meter, an electricity meter, and a sensor.

In this application, the terminal device may further have a sensing capability. For example, a radio frequency module of the terminal device may send a radio frequency signal, and then know an environment by receiving and processing a reflected signal. Therefore, in this application, the terminal device may also detect and/or collect sensing data.

2. Access network device (radio access network, RAN) 120: The access network device 120 is configured to provide a network access function for an authorized terminal device in a specific area, and can use transmission tunnels of different quality based on a level, a service requirement, and the like of the terminal device.

The access network device can manage a radio resource and provide an access service for the terminal device, to further complete forwarding of a control signal and terminal device data between the terminal device and a core network. The access network device may also be understood as a base station in a conventional network.

In this application, when a base station performs wireless communication by using a millimeter-wave band, the base station naturally has a sensing capability similar to that of a radar, that is, the base station has both a wireless communication capability and the sensing capability. Therefore, in this application, the access network device may also detect and/or collect the sensing data. The access network device in this application may also be referred to as an integrated radar and communication base station. The access network device may not only implement communication service coverage on an on-ground user, but also detect flight targets such as an uncrewed aerial vehicle, a helicopter, and a bird, and on-ground vehicle traffic, a pedestrian, and the like.

3. User plane network element 130: The user plane network element 130 is used for packet routing and forwarding, quality of service (quality of service, QoS) processing on user plane data, and the like.

In a 5G communication system, the user plane network element may be a user plane function (user plane function, UPF) network element. In a future communication system, the user plane network element may still be the UPF network element, or may have another name. This is not limited in this application.

The UPF mainly provides service processing functions of a user plane, including routing a service, forwarding a packet, anchoring, mapping and executing quality of service (quality of service, QoS), identifying an uplink identifier and routing the identifier to a data network, buffering a downlink packet, triggering a notification of downlink data arrival, and connecting to an external data network.

4. Data network 140: The data network 140 is a network used to provide data transmission.

In the 5G communication system, the data network may be a data network (data network, DN). In the future communication system, the data network may still be the DN, or may have another name. This is not limited in this application.

5. Access management network element 150: The access management network element 150 is mainly used for mobility management, access management, and the like, and may be configured to implement functions, for example, lawful interception and access authorization/authentication, other than session management in functions of a mobility management entity (mobility management entity, MME).

In the 5G communication system, the access management network element may be an access management function (access and mobility management function, AMF) network element. In the future communication system, the access management network element may still be the AMF network element, or may have another name. This is not limited in this application.

6. Session management network element 160: The session management network element 160 is mainly configured to manage a session, assign and manage an internet protocol (internet protocol, IP) address of the terminal device, select an endpoint that can manage a user plane function interface and a policy control and charging function interface, notify downlink data, and the like.

In the 5G communication system, the session management network element may be a session management function (session management function, SMF) network element. In the future communication system, the session management network element may still be the SMF network element, or may have another name. This is not limited in this application.

7. Policy control network element 170: The policy control network element 170 is configured to guide a unified policy framework of network behavior, and provide policy rule information for a control plane function network element (for example, the AMF or SMF network element), and the like.

In the 5G communication system, the policy control network element may be a policy control function (policy control function, PCF) network element. In the future communication system, the policy control network element may still be the PCF network element, or may have another name. This is not limited in this application.

8. Binding support network element 180: The binding support network element 180 is configured to search for a PCF associated with a session.

In the 5G communication system, the binding support network element may be a binding support function (binding support function, BSF) network element. In the future communication system, the binding support network element may still be the BSF network element, or may have another name. This is not limited in this application.

9. Authentication server 190: The authentication server 190 is configured to authenticate a service, generate a key to implement two-way authentication for the terminal device, and support a unified authentication framework.

In the 5G communication system, the authentication server may be an authentication server function (authentication server function, AUSF) network element. In the future communication system, the authentication server function network element may still be the AUSF network element, or may have another name. This is not limited in this application.

10. Data management network element 1100: The data management network element 1100 is configured to process a terminal device identifier, perform access authentication, registration, and mobility management, and the like.

In the 5G communication system, the data management network element may be a unified data management (unified data management, UDM) network element. In the future communication system, unified data management may still be the UDM network element, or may have another name. This is not limited in this application.

It should be noted that the foregoing "network element" may also be referred to as an entity, a device, an apparatus, a module, or the like. This is not particularly limited in this application. In addition, in this application, for ease of understanding and description, the description of the "network element" is omitted in some descriptions. For example, the AMF network element is briefly referred to as the AMF. In this case, the "AMF" should be understood as an AMF network element or an AMF entity. Same or similar cases are not described below.

The network architecture may further include a location management service function (location management service, LMF) network element or a gateway mobile location center (gateway mobile location center, GMLC) network element, and may initiate a positioning procedure of the terminal device to obtain location information of the terminal device.

In this application, the network architecture may further include a sensing network element, and the sensing network element is responsible for enabling a sensing service in an end-to-end manner. For example, the sensing network element obtains a sensing requirement based on the terminal device, an internal requirement of a network, or a requirement of an external sensing service requester. After obtaining the sensing requirement, the sensing network element triggers the access network device or the terminal device to detect and/or collect sensing data.

It should be noted that in the 5G network, the sensing network element may be one of network elements in a 5G core network (5G core, 5GC). Alternatively, the sensing network element may be a non-core network element. Alternatively, the sensing network element may be independently deployed, or may be a sub-network element or a module in a network element of the 5G core network. For example, the sensing network element may be deployed together with the AMF network element, the LMF network element, the GMLC network element, the SMF network element, or the UPF network element. This is not particularly limited in this application.

It should be understood that the foregoing network architecture used in this embodiment of this application is merely an example of a network architecture described from the perspective of a service architecture, and a network architecture applicable to this embodiment of this application is not limited thereto. Any network architecture that can implement functions of the foregoing network elements is applicable to this embodiment of this application.

For example, in some network architectures, network function entities such as the AMF, an SMF, a PCF, a GMF, and a UDM are all referred to as network function (Network Function, NF) network elements. Alternatively, in some other network architectures, a set of network elements such as an AMF, an SMF, a PCF, a GMF, and a UDM may be all referred to as control plane function (Control Plane Function, CPF) network elements.

In this application, the proposed sensing network element may communicate with another network element. For example, the sensing network element may communicate with network elements such as the RAN network element, the AMF network element, the SMF network element, the LMF network element, and the GMLC network element.

The following uses network elements in a 5G system as an example to describe specific solution details. It may be understood that, when the solution is used in an LTE system or the future communication system, each network element in the solution may be replaced with another network element having a corresponding function. This is not limited in this application.

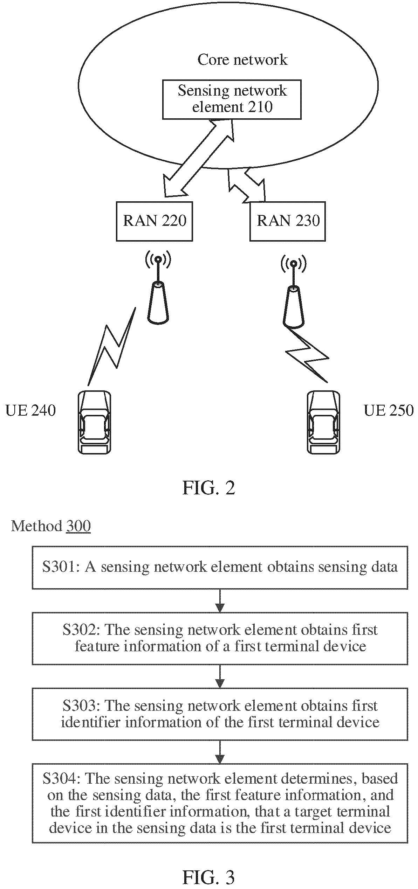

FIG. 2 shows a network architecture applicable to an embodiment of this application. The network architecture 200 includes a sensing network element, at least one RAN network element having a sensing capability, and/or at least one UE having the sensing capability, for example, a sensing network element 210, a RAN 220, a RAN 230, a UE 240, and a UE 250 shown in FIG. 2.

The sensing network element 210 is responsible for enabling a sensing service in an end-to-end manner. For example, the sensing network element 210 may receive a sensing requirement from a terminal device, or obtain a sensing requirement based on an internal requirement of a network. Alternatively, the sensing network element 210 receives a subscription request from another network element (for example, an AMF network element) to obtain a sensing requirement. Alternatively, the sensing network element 210 receives a sensing requirement from an external sensing service requester. After obtaining the sensing requirement, the sensing network element 210 triggers one or more devices of the RAN 220, the RAN 230, the UE 240, and the UE 250 to detect and/or collect sensing data. After obtaining the sensing data through detection, the one or more devices provide the sensing data to the sensing network element 210, and the sensing network element 210 performs processing based on the sensing data and returns a processing result to another network element. Alternatively, the sensing network element 210 performs optimization or the like inside the network based on the sensing data.

In this embodiment of this application, the sensing network element 210 may include a control unit and a calculation unit that use a separated architecture. The control unit may be configured to obtain the sensing requirement, control, based on the sensing requirement, the one or more devices to detect and/or collect the sensing data, and indicate the calculation unit to process the sensing data. The calculation unit may be configured to obtain the sensing data from the one or more devices for processing. In addition, the control unit may further interact with a core network element (for example, an AMF network element, a GMLC network element, or an LMF network element), and send, to the calculation unit, information obtained from the core network element. In a scenario in which the core network element needs to be triggered to initiate a positioning procedure or an identifier obtaining procedure, the calculation unit and the control unit both may trigger the core network element to obtain location information or identifier information. The calculation unit may directly return processed sensing data to a sensing service requester, or may return processed sensing data to a sensing service requester via the control unit. This is not particularly limited in this application.

It should be understood that the network architecture in FIG. 1 and FIG. 2 is merely an example, and a network architecture applicable to embodiments of this application is not limited thereto. Any network architecture that can implement functions of the foregoing network elements is applicable to embodiments of this application.

With the update of mobile communication technologies, a communication network will be constructed in a flexible, efficient, and multi-functional manner. Currently, in scenarios such as autonomous driving, security supervision, a smart home, and a smart terminal, a sensing capability brought by a millimeter-wave band owned by a base station and/or a terminal may be used to perform sensing identification on an area, an object, a terminal, or an event.

However, sensing data generated by a base station and/or a terminal by performing the sensing identification can describe only parameters such as an appearance, a location, or a speed of an object, and cannot identify identifier information of an object (if the object is a terminal device). In this case, in a sensing system, sensing data of the object and the identifier information of the object cannot be provided together to the sensing service requester, and communication with the terminal device based on the identifier information of the terminal device of the sensed object cannot be performed. This limits application of the sensing system. Therefore, there is a need to explore a method for obtaining identifier information of a terminal device in the sensing data, to enable the sensing system to support more sensing applications.

Therefore, a wireless communication method is urgently needed, to enable the sensing system to support more sensing applications.

FIG. 3 shows a schematic flowchart of a wireless communication method 300 according to an embodiment of this application.

S301: A sensing network element obtains sensing data.

The sensing network element may receive the sensing data from a first device.

For example, the first device may autonomously perform a sensing operation to sense a surrounding environment, and correspondingly generate the sensing data. The first device may alternatively trigger another device having a sensing capability to sense a surrounding environment and correspondingly generate the sensing data.

For example, the first device may be an access network device having the sensing capability, or may be a terminal device having the sensing capability.

It should be understood that a device that performs sensing may be one terminal device or one access network device, may be a plurality of terminal devices or a plurality of access network devices, or may be one or more terminal devices and one or more access network devices. This is not particularly limited in this application.

In addition, when the sensing is performed by a plurality of devices, the sensing data may be understood as sensing data received from different devices, namely, multi-path sensing data, or may be understood as a result of fusion processing of multi-path sensing data.

The sensing network element may determine, in the following manner, that first identifier information (namely, target identifier information) of a target terminal device in the sensing data needs to be obtained, in other words, determine that target identifier information of a target terminal device corresponding to a target sensed object in the sensing data needs to be obtained.

The sensing network element receives first information from a second network element.

The sensing network element obtains the first identifier information (namely, the target identifier information) of the target terminal device in the sensing data based on the first information. Alternatively, the sensing network element determines, based on the first information, that the target identifier information of the target terminal device in the sensing data needs to be obtained.

The second network element may be configured to obtain or generate the first information. For example, the second network element may obtain or generate a sensing service request carrying the first information, where the sensing service request is used to request the sensing data. The second network element may be any one of the following: a network exposure function (network exposure function, NEF) network element, a gateway mobile sensing center (gateway mobile sensing center, GMSC), a gateway sensing center (gateway sensing center, GSC), an SMF network element, an application server (application server, AS), and an application function (application function, AF).

Optionally, the first information may include at least one of the following information: a device type of the target terminal device, a service type of the target terminal device, a trigger condition of the terminal device, and first area information.

By way of example, and not limitation, the service type may indicate the first device to perform sensing detection on an uncrewed aerial vehicle in an area. In this case, the uncrewed aerial vehicle is considered as the target terminal device, and identifier information of the uncrewed aerial vehicle needs to be identified. In other words, the sensing network element needs to identify the identifier information of the uncrewed aerial vehicle. Alternatively, a sensing service type may refer to a dynamic map of an area. Objects that may have a UE capability, such as a vehicle, a motorcycle, a bicycle, and a pedestrian, in the dynamic map may be considered as target terminal devices, and identifier information of the objects needs to be identified. In other words, the sensing network element needs to identify the identifier information of the objects that may have the UE capability, such as the vehicle, the motorcycle, the bicycle, and the pedestrian, in the sensing data. The trigger condition may indicate that the sensing network element obtains the target identifier information of the target terminal device in the sensing data when the trigger condition is met. For example, if time for which a vehicle stays in an emergency lane reaches or exceeds a preset threshold, the vehicle is considered as the target terminal device, and identifier information of the vehicle needs to be identified. In other words, the sensing network element needs to identify the identifier information of the vehicle. If a speed of a vehicle reaches or exceeds a preset threshold, the vehicle is considered as the target terminal device, and identifier information of the vehicle needs to be identified. In other words, the sensing network element needs to identify the identifier information of the vehicle. If a terminal device enters a dangerous area (for example, an area in which a debris flow occurs), the terminal device is considered as the target terminal device, and identifier information of the terminal device needs to be identified. In other words, the sensing network element needs to identify identifier information of the vehicle. If an accident occurs on a vehicle or a vehicle is likely to cause an accident, the vehicle is considered as the target terminal device, and identifier information of the vehicle needs to be identified. In other words, the sensing network element needs to identify the identifier information of the vehicle. If a person is likely to be hit by a vehicle, a terminal device of the person and the vehicle are considered as target terminal devices, and identifier information of the terminal device of the person and identifier information of the vehicle need to be identified. In other words, the sensing network element needs to identify the identifier information of the terminal device of the person and the identifier information of the vehicle. A type of the target terminal device may indicate that a terminal device having a specific feature is the target terminal device, or a terminal device providing a specific type of service is the target terminal device. In other words, when the sensing data includes a target terminal device of this type, target identifier information of the target terminal device needs to be identified. In other words, the sensing network element needs to identify the target identifier information of the target terminal device.

Alternatively, the first information may implicitly indicate that the sensing network element needs to obtain the target identifier information of the target terminal device in the sensing data, or implicitly indicate that the sensing network element needs to obtain the target identifier information of the target terminal device corresponding to the target sensed object in the sensing data.

In addition, the second network element may alternatively explicitly indicate that the sensing network element needs to obtain the target identifier information of the target terminal device in the sensing data. Optionally, the sensing network element may receive second information from the second network element. The second information indicates the sensing network element to determine the target terminal device, or indicates that the sensing network element needs to obtain the target identifier information of the target terminal device in the sensing data, or indicates that the sensing network element needs to obtain the target identifier information of the target terminal device corresponding to the target sensed object in the sensing data.

S302: The sensing network element obtains first feature information of a first terminal device.

Optionally, the first feature information is used to match the first terminal device, or the first feature information is used to associate the first terminal device.

For example, the first feature information includes at least one of the following information: location information of the first terminal device, first speed information of the first terminal device, a first movement direction of the first terminal device, a first movement track of the first terminal device, and first appearance information of the first terminal device.

The location information may be obtained by a positioning network element (for example, a GMLC network element or an LMF network element) by initiating a positioning procedure. The location information may be location coordinates of the first terminal device, or may be a relative distance and a relative direction from the first terminal device to a location. This is not particularly limited in this application.

The positioning network element may initiate the positioning procedure for a plurality of times within first time, to obtain a plurality of location information, where the plurality of location information may be used to determine the first speed information, the first movement direction, or the first movement track. Alternatively, the first speed information, the first movement direction, or the first movement track may be obtained by another network element in another sensing manner, for example, may be obtained by invoking a camera, a laser radar, an infrared device, or another device. In addition, the first appearance information may include but is not limited to a size, a shape contour, a color, a pattern, or another appearance feature of the first terminal device. The first appearance information may be stored in a network element used for management, or may be obtained by another network element by invoking a camera, a laser radar, an infrared device, or another device.

Because the first speed information, the first movement direction, and the first movement track may be determined by obtaining the location information of the first terminal device for a plurality of times, the following describes manners of obtaining the location information by the sensing network element.

The sensing network element may obtain the location information in the following two manners. The following briefly describes the two manners. For specific procedure descriptions, refer to the following descriptions of the method 500 to the method 800.

### Manner 1:

The sensing network element receives the location information of the first terminal device from the positioning network element.

The positioning network element may be an LMF network element or a GMLC network element. Optionally, when the sensing network element receives location information from the LMF, the sensing network element may further receive the location information of the first terminal device from the LMF network element via an AMF network element, in other words, the LMF network element may send the location information to the sensing network element via the AMF network element.

In a first implementation of Manner 1, before the sensing network element receives the location information of the first terminal device from the positioning network element, the sensing network element may send a first location request message to the positioning network element. The positioning network element initiates the positioning procedure based on the first location request message to obtain the location information, and sends the location information to the sensing network element. Optionally, when the sensing network element sends the first location request message to the LMF network element, the sensing network element may alternatively send the first location request message to the LMF network element via the AMF network element.

The first location request message may include any one of the following information: 1. First identifier information of the first terminal device. 2. First area information, where the first area information corresponds to the target terminal device. 3. Area identifier information corresponding to the first area information, where the area identifier information includes at least one of the following information: a tracking area TA identifier corresponding to the first area information, an access network identifier corresponding to the first area information, a cell identifier corresponding to the first area information, and an AMF network element identifier corresponding to the first area information. The first area information may be location information of a first area, and the first area may be an area including the target terminal device.

For the foregoing case 1, when the first location request message includes the first identifier information of the first terminal device, optionally, the sensing network element receives the first identifier information from a first network element (for example, an AMF network element). For example, before the sensing network element receives the first identifier information of the first terminal device from the first network element, the sensing network element sends a first identifier request message to the first network element. The first network element determines the first identifier information of the first terminal device based on the first identifier request message, and sends the first identifier information to the sensing network element. Alternatively, for another example, before the sensing network element receives the first identifier information of the first terminal device from the first network element, the sensing network element sends a first identifier request message and first trigger information to the first network element, and the sensing network element determines the first identifier information of the first terminal device based on the first identifier request message and the first trigger information. The first identifier request message may include the first area information or the area identifier information of the first area, where the first area information may be location coordinate information of the first area. The first trigger information may include at least one of the following information: the type of the target terminal device, the service type of the target terminal device, and a trigger condition of the target terminal device. The type of the target terminal device may indicate that a terminal device of one or more types (for example, a vehicle or an uncrewed aerial vehicle) is the target terminal device. Descriptions of the type of the sensing service and the trigger condition are similar to the descriptions of the type of the sensing service and the trigger condition in step S301. Details are not described herein again. By way of example, and not limitation, the first network element may determine, based on the first area information and the type of the target terminal device, to return identifier information of a terminal device that is of the type and that is in the first area to the sensing network element. Alternatively, the first network element may determine, based on the first area information and the trigger condition, to return identifier information of a terminal device that meets the trigger condition and that is in the first area to the sensing network element. The sensing network element may send the first identifier request message and the first trigger information together to the first network element. The sensing network element may alternatively send the first identifier request message and the first trigger information separately to the first network element. In this case, after receiving the first trigger information, the first network element may return, based on the first trigger information, identifier information that meets the first trigger information to the sensing network element. In this way, the positioning network element may initiate the positioning procedure based on the first identifier information, to obtain the location information.

For the foregoing case 2, when the first location request message includes the first area information, optionally, the first area is a sensing area corresponding to the sensing data. Alternatively, the sensing network element may determine the first area based on the sensing data. For example, the sensing network element may determine the area including the target terminal device as the first area. In this way, the positioning network element may initiate, in the first area based on the first area information, the positioning procedure of the target terminal device, to obtain the location information of the target terminal device.

For the foregoing case 3, when the first location request message includes the area identifier information corresponding to the first area information, the area identifier information may be the identifier information of the first area corresponding to the first area information. The sensing network element may determine, based on the first area, an access network device, a TA area, or an AMF network element corresponding to the first area. In this way, the positioning network element may initiate, based on the area identifier information, the positioning procedure of the target terminal device that is in the first area, to obtain the location information of the target terminal device.

It should be noted that, in the foregoing case 2 and case 3, the positioning network element may send a second identifier request message to the first network element based on the first location request message. The first network element obtains the first identifier information of the first terminal device based on the second identifier request message, and sends the first identifier information to the positioning network element, so that the positioning network element may initiate the positioning procedure based on the first identifier information, to obtain the location information. For example, when the second identifier request message includes the first area information, the first network element may send identifier information of a terminal device registered in the first area to the positioning network element. When the second identifier request message includes the area identifier information, the first network element sends, to the positioning network element, identifier information of a terminal device that is in the TA area, that is managed by the access network device, or that is managed by the AMF network element.

In this way, in the first implementation of Manner 1, the sensing network element may request, based on the sensing data, the positioning network element to perform the positioning procedure, to obtain the location information from the positioning network element.

In a second implementation of Manner 1, before the sensing network element receives the location information of the first terminal device from the positioning network element, the first network element sends a third location request message to the positioning network element. The positioning network element initiates the positioning procedure based on the third location request message to obtain the location information, and sends the location information to the sensing network element.

The third location request message includes the first identifier information of the first terminal device.

The first network element may actively send the third location request message to the positioning network element. For example, the third location request message may include identifier information of at least one terminal device registered with the first network element, where the at least one terminal device includes the first terminal device.

Alternatively, the first network element may send the third location request message to the positioning network element based on a trigger. Optionally, the sensing network element sends first trigger information to the first network element, where the first trigger information is used to obtain the first identifier information.

For example, the first network element receives the first trigger information, and sends the third location request message to the positioning network element based on the first trigger information. The first trigger information may include at least one of the following information: the type of the target terminal device, the service type of the target terminal device, and a trigger condition of the target terminal device. The type of the target terminal device may indicate that a terminal device of one or more types (for example, a vehicle or an uncrewed aerial vehicle) is the target terminal device. Descriptions of the type of the sensing service and the trigger condition are similar to the descriptions of the type of the sensing service and the trigger condition in step S301. For brevity, details are not described herein again.

In this way, in the second implementation of Manner 1, the first network element requests the positioning network element to perform the positioning procedure, and the positioning network element sends the obtained location information to the sensing network element.

### Manner 2:

The sensing network element receives the location information of the first terminal device from a first network element.

The first network element may be an AMF network element.

In a first implementation of Manner 2, before the sensing network element receives the location information of the first terminal device from the first network element, the sensing network element may send a second location request message to the first network element. The first network element requests, based on the second location request message, the positioning network element to initiate the positioning procedure to obtain the location information, and sends the location information to the sensing network element.

The second location request message may include any one of the following information: 1. First area information, where the first area information corresponds to the target terminal device. 2. Area identifier information corresponding to the first area information, where the area identifier information includes at least one of the following information: a tracking area TA identifier corresponding to the first area information, a cell identifier corresponding to a first area, and an access network identifier corresponding to the first area.

It should be noted that descriptions of the foregoing first area information are similar to the descriptions of the first area in Manner 1. Correspondingly, descriptions of area location information, the TA identifier, and the access network identifier are also similar to the descriptions in Manner 1. For brevity, details are not described herein again.

In this way, in the first implementation of Manner 2, the sensing network element sends the second location request message to the first network element based on the sensing data. The first network element requests the positioning network element to initiate the positioning procedure to obtain the location information, and sends the location information to the sensing network element.

In a second implementation of Manner 2, before the sensing network element receives the location information of the first terminal device from the first network element, the first network element sends a third location request message to the positioning network element. The positioning network element initiates the positioning procedure based on the third location request message to obtain the location information, and sends the location information to the first network element. The first network element sends the location information and the first identifier information to the sensing network element.

The first network element may actively send the third location request message to the positioning network element, or may send the third location request message to the positioning network element based on a request from the sensing network element.

For example, the first network element receives second trigger information, and sends the third location request message to the positioning network element based on the second trigger information. The second trigger information is used to obtain the first identifier information and the location information. The second trigger information may include at least one of the following information: the type of the target terminal device, the service type of the target terminal device, and a trigger condition of the target terminal device. The type of the target terminal device may indicate that a terminal device of one or more types (for example, a vehicle or an uncrewed aerial vehicle) is the target terminal device. Descriptions of the type of the sensing service and the trigger condition are similar to the descriptions of the type of the sensing service and the trigger condition in step S301. For brevity, details are not described herein again.

In this way, in the second implementation of Manner 2, the first network element requests the positioning network element to perform the positioning procedure, the positioning network element sends the obtained location information to the first network element, and the first network element sends the location information to the sensing network element.

S303: The sensing network element obtains the first identifier information of the first terminal device.

The sensing network element may receive the first identifier information from the positioning network element, or may receive the first identifier information from the first network element.

For example, the first network element may send the first identifier information to the sensing network element in response to a first identifier request message sent by the sensing network element.

For another example, the first network element may actively send the first identifier information to the sensing network element.

For another example, the first network element may determine the first identifier information based on first trigger information sent by the sensing network element, and send the first identifier information to the sensing network element.

For another example, the positioning network element may send a second identifier request message to the first network element based on the first location request message, the first network element sends the first identifier information to the positioning network element based on the second identifier request message, and the positioning network element sends the first identifier information to the sensing network element.

The foregoing merely briefly describes a manner of obtaining the first identifier information by the sensing network element. For specific procedure descriptions, refer to the following descriptions of the method 500 to the method 800.

S304: The sensing network element determines, based on the sensing data, the first feature information, and the first identifier information, that the target terminal device in the sensing data is the first terminal device.

Alternatively, the sensing network element determines, based on the sensing data and the first feature information corresponding to the first identifier information, that the target terminal device in the sensing data is the first terminal device, where target identifier information of the target terminal device is the first identifier information.

Optionally, the sensing network element determines target feature information of the target terminal device based on the sensing data.

The target terminal device may be a terminal device whose target identifier information needs to be determined by the sensing network element. The target feature information is used to match the target terminal device, or the target feature information is used to associate the target terminal device.

The target feature information of the target terminal device may include at least one of the following information: target location information of the target terminal device, target speed information of the target terminal device, a target movement direction of the target terminal device, a target movement track of the target terminal device, and target appearance information of the target terminal device.

It should be understood that the target feature information should correspond to the first feature information. For example, if the target feature information is the target location information, the first feature information is the location information.

When the target feature information matches the first feature information, the sensing network element may determine that the first terminal device is the target terminal device.

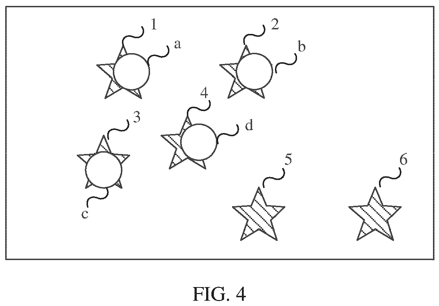

For clarity, an example in which the target feature information is the target location information and the first feature information is the location information is used. Matching between the target location information and the location information is described by using an example with reference to FIG. 4. Refer to FIG. 4. A pentagram represents a terminal device in sensing data, where 1 represents a terminal device #1, 2 represents a terminal device #2, 3 represents a terminal device #3, 4 represents a terminal device #4, 5 represents a terminal device #5, and 6 represents a terminal device #6. A circle represents a terminal device that includes a first terminal device and that has undergone a positioning procedure, where a represents a terminal device #a, b represents a terminal device #b, c represents a terminal device #c, and d represents a terminal device #d. A sensing network element receives the sensing data, may obtain a location distribution diagram of the terminal device #1 to the terminal device #6 (including location information of each terminal device) based on the sensing data, and determines, based on the sensing data, that the terminal device #1 is a target terminal device. The sensing network element receives, from a positioning network element or a first network element, a location distribution diagram of the terminal device #a to the terminal device #d (including location information of each terminal device) and identifier information of the location distribution diagram of the terminal device #a to the terminal device #d. The sensing network element compares the two location distribution diagrams, may determine that location information of the terminal device #1 (the target terminal device) matches location information of the terminal device #a (the first terminal device), and therefore may further determine that the terminal device #1 and the terminal device #a are a same terminal device and identifier information of the terminal device #1 is identifier information of the terminal device #a.

Alternatively, refer to FIG. 4. A pentagram represents an object in sensing data, where 1 represents an object #1, 2 represents an object #2, 3 represents an object #3, 4 represents an object #4, 5 represents an object #5, and 6 represents an object #6. A circle represents a terminal device that includes a first terminal device and that has undergone a positioning procedure, where a represents a terminal device #a, b represents a terminal device #b, c represents a terminal device #c, and d represents a terminal device #d. A sensing network element receives the sensing data, may obtain a location distribution diagram of the terminal device #1 to the terminal device #6 (including location information of each terminal device) based on the sensing data, and determines, based on the sensing data, that the object #1 is a target terminal device, in other words, identifier information of the object #1 needs to be identified (if the object #1 is a terminal device). The sensing network element receives, from a positioning network element or a first network element, a location distribution diagram of the terminal device #a to the terminal device #d (including location information of each terminal device) and identifier information of the location distribution diagram of the terminal device #a to the terminal device #d. The sensing network element compares the two location distribution diagrams, may determine that location information of the object #1 matches location information of the terminal device #a (the first terminal device), and therefore may further determine that the object #1 is the terminal device #a, in other words, identifier information of the object #1 is identifier information of the terminal device #a.

The foregoing uses the matching between the target location information and the location information as an example. It should be understood that matching between other feature information, such as matching between target movement direction information and first movement direction information, matching between a target movement track and a first movement track, and matching between target appearance information and first appearance information, is similar to the matching between the target location information and the location information. For brevity, details are not described herein again.

In addition, it should be understood that a quantity of target terminal devices in the sensing data is not limited in this application, and the sensing data may include one or more target terminal devices.

In this way, in this application, the sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that target identifier information of the target terminal device is the identifier information corresponding to the feature information. In other words, terminal device identity information of a sensed object is obtained. This increases a sensing dimension of a sensing system, and can enable the sensing system to support more sensing applications.

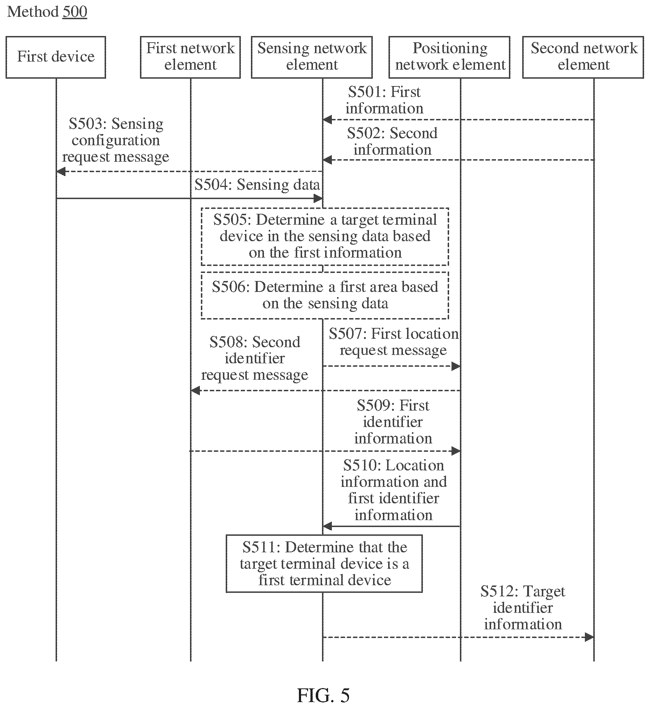

FIG. 5 shows a schematic flowchart of a wireless communication method 500 according to an embodiment of this application.

Optionally, in S501, a second network element sends first information to a sensing network element, and correspondingly, the sensing network element receives the first information from the second network element.

The first information may include at least one of the following information: a device type of a target terminal device, a service type of the target terminal device, a trigger condition of a terminal device, and first area information. Descriptions about the first information are similar to the descriptions about the first information in the method 300. For brevity, details are not described herein again.

The second network element may be any one of the following: a NEF network element, a GMSC, a GSC, an SMF network element, an AS, or an AF.

The second network element may separately send the first information to the sensing network element, or may include the first information in a sensing service request message. When the sensing service request message carries the first information, the sensing service request message may further carry sensing requirement information. The sensing requirement information may refer to service requirement information of a sensing service. A sensing result returned by a network to a sensing service requester is required to meet the sensing requirement information. Alternatively, in other words, the sensing requirement information may refer to a requirement on performing sensing detection by a device that performs sensing, and/or a requirement on analyzing and processing sensing data by the sensing network element. The sensing requirement information may include one or more of the following: a sensing distance, a sensing area, a sensing speed range, sensing distance resolution, sensing angle resolution, sensing speed resolution, sensing distance precision, sensing speed precision, sensing angle precision, a sensing quality of service QoS requirement, sensed object identification accuracy, a sensed object identification false alarm rate, sensing data update frequency, a sensing dimension, and a sensing feedback manner. It should be understood that the sensing area in the sensing requirement information may be the same as or different from a first area in this embodiment of this application. The sensing area is an area in which the device that performs sensing performs sensing detection, and the first area is an area corresponding to the target terminal device included in the sensing data. In addition, the first information may be an independent information element, or may be understood as one type of sensing requirement information.

Optionally, in S502, the second network element sends second information to the sensing network element, and correspondingly, the sensing network element receives the second information from the second network element.

The second information indicates the sensing network element to determine the target terminal device, indicates that the sensing network element needs to obtain target identifier information of the target terminal device in the sensing data, or indicates that the sensing network element needs to obtain target identifier information of the target terminal device corresponding to a target sensed object in the sensing data.

The second network element may separately send the second information to the sensing network element, or may include the second information in the sensing service request message.

Optionally, in S503, the sensing network element sends a sensing configuration request message to a first device, and correspondingly, the first device receives the sensing configuration request message from the sensing network element.

For example, the sensing network element generates the sensing configuration request message based on the first information and/or the second information and sends the sensing configuration request message to the first device, where the sensing network element may directly send the sensing configuration request message to the first device or send the sensing configuration request message to the first device via a first network element (for example, an AMF). In addition, the sensing configuration request message may include at least one of the following: the sensing distance, a sensing angle, a sensing range, the sensing speed range, the sensing distance resolution, the sensing speed resolution, the sensing angle resolution, the sensing distance precision, the sensing speed precision, the sensing angle precision, and sensing duration. In this way, the first device may perform sensing based on the sensing configuration request message, to generate the sensing data.

S504: The sensing network element receives the sensing data from the first device, and correspondingly, the first device sends the sensing data to the sensing network element.

Optionally, in S505, the sensing network element determines the target terminal device in the sensing data based on the first information. Alternatively, the sensing network element determines, based on the first information, that terminal identifier information of a target object in the sensing data needs to be identified (if the target object is a terminal device).

Descriptions of a manner of determining the target terminal device by the sensing network element based on the first information are similar to the descriptions in the method 300. For brevity, details are not described herein again.

Optionally, in S506, the sensing network element determines the first area.

In a first implementation, the first area may be a sensing area corresponding to the sensing data, and the sensing area corresponding to the sensing data may be understood as an area used to obtain the sensing data, in other words, the sensing data is obtained by performing sensing in the area. In this case, the sensing network element may determine the first area based on the sensing area in the sensing requirement information.

In a second implementation, the first area may alternatively be an area including the target terminal device. For example, the first area is an area that uses the target terminal device as a center and that has a range of a specific distance, or the first area is a tracking area, a cell, or a management area of an access network device in which the target terminal device is located. In this case, the range of the first area may include a range of the sensing area, may belong to a range of the sensing area, or may be a range that overlaps the sensing area. This is not particularly limited in this application.

Optionally, in S507, the sensing network element sends a first location request message to a positioning network element, and correspondingly, the positioning network element receives the first location request message from the sensing network element.

The first location request message may include the first area information, and the first area information may be location coordinates of the first area. Alternatively, the first location request message may include area identifier information of the first area. The area identifier information includes at least one of the following information: a tracking area TA identifier corresponding to the first area information, an access network identifier corresponding to the first area information, a cell identifier corresponding to the first area information, and an AMF network element identifier corresponding to the first area information.

For example, the sensing network element may determine a physical coordinate location of the first area based on the sensing data, to generate the first area information or the area identifier information. Alternatively, the sensing network element may determine a physical coordinate location of the first area based on the sensing area in the sensing requirement information sent by the second network element, to generate the first area information or the area identifier information.

Optionally, in S508, the positioning network element sends a second identifier request message to the first network element, and correspondingly, the first network element receives the second identifier request message from the positioning network element.

The first network element may be an AMF network element.

The positioning network element may determine the first network element based on the first area information or the area identifier information.

The second identifier request message may include the first area information or the area identifier information. The area identifier information may be obtained from the first location request message sent by the sensing network element. When the first location request message includes the first area information, the positioning network element may alternatively determine the area identifier information based on the first area information.

Optionally, in S509, the first network element sends first identifier information of a first terminal device to the positioning network element, and correspondingly, the positioning network element receives the first identifier information of the first terminal device from the first network element.

The first network element may determine the first identifier information of the first terminal device based on the second identifier request message and a terminal device currently registered with the first network element.

For example, when the second identifier request message includes the first area information, the first network element may send, to the positioning network element based on registration location information of the terminal device registered with the first network element, identifier information of a terminal device registered in the first area. When the second identifier request message includes the TA identifier corresponding to the first area, the first network element may send, to the positioning network element, identifier information of a terminal device registered in the TA area. When the second identifier request message includes the access network identifier corresponding to the first area, the first network element may send, to the positioning network element, identifier information of a terminal device managed by an access network device corresponding to the access network identifier. When the second identifier request message includes the cell identifier corresponding to the first area, the first network element may send, to the positioning network element, identifier information of a terminal device managed by an access network device corresponding to the cell identifier. When the second identifier request message includes the AMF identifier, the first network element may send, to the positioning network element, identifier information of a terminal device registered with the AMF network element.

It should be understood that at least one terminal device returned by the first network element includes the first terminal device.

The positioning network element may initiate a positioning procedure based on identifier information of the at least one terminal device returned by the first network element, to obtain location information of the at least one terminal device, where the location information includes location information of the first terminal device.

S510: The positioning network element sends the location information and the first identifier information of the first terminal device to the sensing network element, and correspondingly, the sensing network element receives the location information and the first identifier information of the first terminal device from the positioning network element.

For example, the positioning network element forms a list of the obtained location information and the identifier information of the at least one terminal device, and sends the list to the sensing network element.

S511: The sensing network element determines, based on the sensing data, the location information, and the first identifier information, that the target terminal device in the sensing data is the first terminal device. In other words, the sensing network element determines, based on the sensing data, the location information, and the first identifier information, that the target object in the sensing data is the first terminal device.

For example, the sensing network element may form a location distribution of the target terminal device based on the sensing data, and form a location distribution of the first terminal device based on the location information of the at least one terminal device sent by the positioning network element. The sensing network element determines, by comparing the two location distributions, that the target terminal device is the first terminal device. In other words, the sensing network element determines that the target terminal device is a specific terminal device in the at least one terminal device, and the specific terminal device is the first terminal device. The first identifier information of the first terminal device is the target identifier information of the target terminal device. In other words, the sensing network element may form a location distribution of the target object based on the sensing data, and form the location distribution of the first terminal device based on the location information of the at least one terminal device sent by the positioning network element. The sensing network element determines, by comparing the two location distributions, that the target object is the first terminal device. In other words, the sensing network element determines that the target object is a specific terminal device in the at least one terminal device, and the specific terminal device is the first terminal device. The first identifier information of the first terminal device is the target identifier information of the target object. Descriptions about determining, by the sensing network element, that the target terminal device is the first terminal device are similar to the descriptions in the method 300. For brevity, details are not described herein again.

Optionally, in S512, the sensing network element sends the target identifier information of the target terminal device to the second network element, and correspondingly, the second network element receives the target identifier information of the target terminal device from the sensing network element. Alternatively, the sensing network element sends the sensing data to the second network element, where the sensing data includes the target identifier information of the target terminal device. Alternatively, the sensing network element sends fusion information to the second network element, where the fusion information is information obtained by the sensing network element by performing fusion processing on the sensing data and the target identifier information.

For example, the sensing network element may return, to the second network element, a sensing service notification message in response to the sensing service request message, and include the target identifier information in the sensing service notification message. Alternatively, the sensing service notification message carries the sensing data or the fusion information.

In this way, in this application, the sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that the target identifier information of the target terminal device is the identifier information corresponding to the feature information. In other words, terminal device identity information of the sensed object is obtained. This increases a sensing dimension of a sensing system, and can enable the sensing system to support more sensing applications.

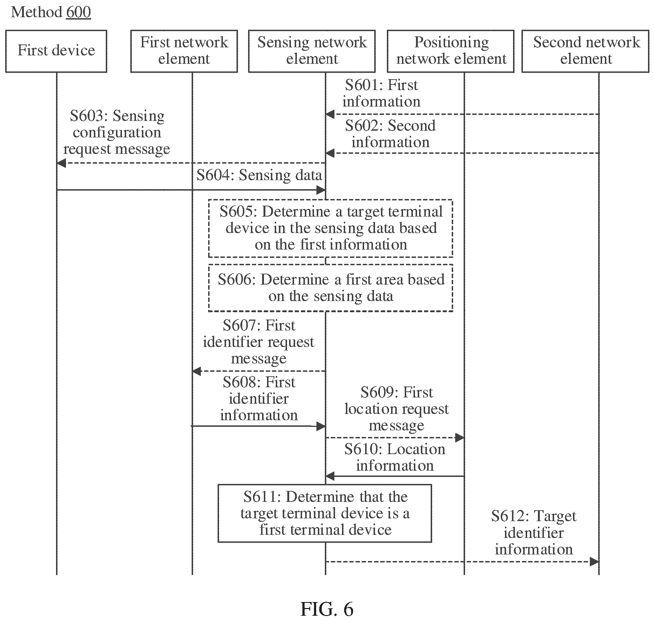

FIG. 6 is a schematic flowchart of a wireless communication method 600 according to an embodiment of this application.

For S601 to S606, refer to the descriptions of steps S501 to S506 in the method 500. For brevity, details are not described herein again.

Optionally, in S607, a sensing network element sends a first identifier request message to a first network element, and correspondingly, the first network element receives the first identifier request message from the sensing network element.

The first identifier request message includes first area information, or the first identifier request message includes area identifier information of a first area. The first area information may be location coordinate information of the first area.

S608: The first network element sends first identifier information of a first terminal device to the sensing network element, and correspondingly, the sensing network element receives the first identifier information of the first terminal device from the first network element.

The first network element may determine the first identifier information of the first terminal device based on the first identifier request message and a terminal device currently registered with the first network element. Descriptions of obtaining the first identifier information of the first terminal device by the first network element based on the first identifier request message are similar to the descriptions of obtaining the first identifier information by the first network element based on the second identifier request message in the method 500. For brevity, details are not described herein again.

Optionally, in S609, the sensing network element sends a first location request message to a positioning network element, and correspondingly, the positioning network element receives the first location request message from the sensing network element.

The first location request message includes the first identifier information of the first terminal device.

For example, the first location request message includes identifier information that is of at least one terminal device and that is obtained from the first network element. The positioning network element initiates a positioning procedure based on the identifier information of the at least one terminal device, to obtain location information of the at least one terminal device, where the location information includes location information of the first terminal device.

It should be understood that, in a possible implementation, the sensing network element obtains at least one piece of first identifier information of at least one first terminal device from the first network element. The sensing network element may send at least one first location request message to the positioning network element, where the at least one first location request message each includes the first identifier information of the at least one first terminal device, to separately request location information of the at least one first terminal device.

S610: The positioning network element sends the location information of the first terminal device to the sensing network element, and correspondingly, the sensing network element receives the location information of the first terminal device from the positioning network element.

For example, the positioning network element forms a list of the obtained location information and the corresponding identifier information of the at least one terminal device, and sends the list to the sensing network element.

For another example, the positioning network element may return the location information of the at least one terminal device to the sensing network element based on a sequence of the identifier information of the at least one terminal device in the first location request message, and the sensing network element associates the identifier information of each terminal device with the location information of each terminal device according to a preset rule.

Alternatively, for another example, when the sensing network element sends at least one first location request message to the positioning network element, the positioning network element may send at least one piece of location information to the sensing network element in response to each first location request message.

S611: The sensing network element determines, based on sensing data, the location information, and the first identifier information, that a target terminal device in the sensing data is the first terminal device.

Descriptions of determining, by the sensing network element, that the target terminal device is the first terminal device are similar to the descriptions in the method 500. For brevity, details are not described herein again.

Optionally, in S612, the sensing network element sends target identifier information of the target terminal device to a second network element, and correspondingly, the second network element receives the target identifier information of the target terminal device from the sensing network element.

Descriptions of a manner of sending the target identifier information to the second network element by the sensing network element are similar to the descriptions in step S512 in the method 500. For brevity, details are not described herein again.

In this way, in this application, the sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that the target identifier information of the target terminal device is the identifier information corresponding to the feature information. In other words, terminal device identity information of a sensed object is obtained. This increases a sensing dimension of a sensing system, and can enable the sensing system to support more sensing applications.

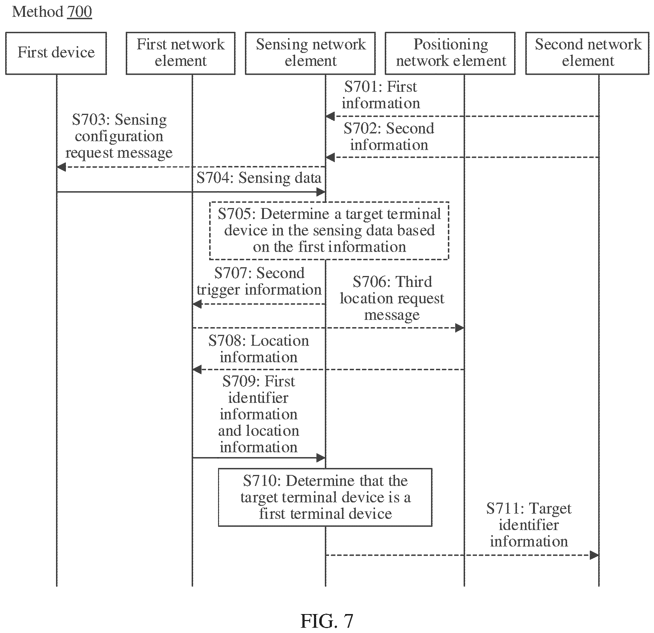

FIG. 7 shows a schematic flowchart of a wireless communication method 700 according to an embodiment of this application.

For S701 to S705, refer to the descriptions of steps S501 to S505 in the method 500. For brevity, details are not described herein again.

Optionally, in S706, a first network element sends a third location request message to a positioning network element, and correspondingly, the positioning network element receives the third location request message from the first network element.

The third location request message includes first identifier information of a first terminal device.

For example, the third location request message may include identifier information of at least one terminal device registered with the first network element, where the at least one terminal device registered with the first network element includes the first terminal device.

It should be understood that the first network element corresponds to a sensing area in which a first device performs sensing, and an area in which the at least one terminal device registered with the first network element is located includes the sensing area.

The first network element may actively send the third location request message to the positioning network element. For example, if the first network element determines, based on registration information of a terminal device, that the terminal device is a vehicle, the first network element may actively send the third location request message to the positioning network element. Alternatively, the first network element may send the third location request message to the positioning network element based on a trigger.

In a possible implementation, the first network element may send at least one third location request message to the positioning network element, where the at least one third location request message each includes first identifier information of the at least one terminal device, to separately request location information of the at least one terminal device.

Optionally, before step S706, the method 700 further includes step S707.

S707: A sensing network element sends second trigger information to the first network element, where the second trigger information is used to obtain location information and the first identifier information of the first terminal device.

For example, the first network element receives the second trigger information, and sends the third location request message to the positioning network element based on the second trigger information. For example, the second trigger information may indicate at least one of the following information: a type of a target terminal device, a service type of the target terminal device, and a trigger condition of the target terminal device. Descriptions about the type, the service type, and the trigger condition of the target terminal device are similar to the descriptions in the method 300. For brevity, details are not described herein again.

Optionally, in S708, the positioning network element sends the location information of the first terminal device to the first network element, and correspondingly, the first network element receives the location information of the first terminal device from the positioning network element.

For example, the positioning network element initiates a positioning procedure of the at least one terminal device in the third location request message based on the third location request message, to obtain the location information of the at least one terminal device, and sends the location information of the at least one terminal device to the first network element, where the location information of the at least one terminal device includes the location information of the first terminal device.

For another example, when the first network element sends at least one third location request message to the positioning network element, the positioning network element may send at least one piece of location information to the first network element in response to each third location request message.

S709: The first network element sends the first identifier information and the location information of the first terminal device to the sensing network element, and correspondingly, the first network element receives the first identifier information and the location information of the first terminal device from the sensing network element.

For example, the first network element forms a list of the location information of the at least one terminal device obtained from the positioning network element and the corresponding identifier information, and sends the list to the sensing network element.

S710: The sensing network element determines, based on the sensing data, the location information, and the first identifier information, that the target terminal device in the sensing data is the first terminal device. In other words, the sensing network element determines, based on the sensing data, the location information, and the first identifier information, that the target object in the sensing data is the first terminal device.

Descriptions of determining, by the sensing network element, that the target terminal device is the first terminal device are similar to the descriptions of step S511 in the method 500. For brevity, details are not described herein again.

Optionally, in S711, the sensing network element sends target identifier information of the target terminal device to a second network element, and correspondingly, the second network element receives the target identifier information of the target terminal device from the sensing network element.

Descriptions of a manner of sending the target identifier information to the second network element by the sensing network element are similar to the descriptions in step S512 in the method 500. For brevity, details are not described herein again.

In this way, in this application, the sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that the target identifier information of the target terminal device is the identifier information corresponding to the feature information. In other words, terminal device identity information of a sensed object is obtained. This increases a sensing dimension of a sensing system, and can enable the sensing system to support more sensing applications.

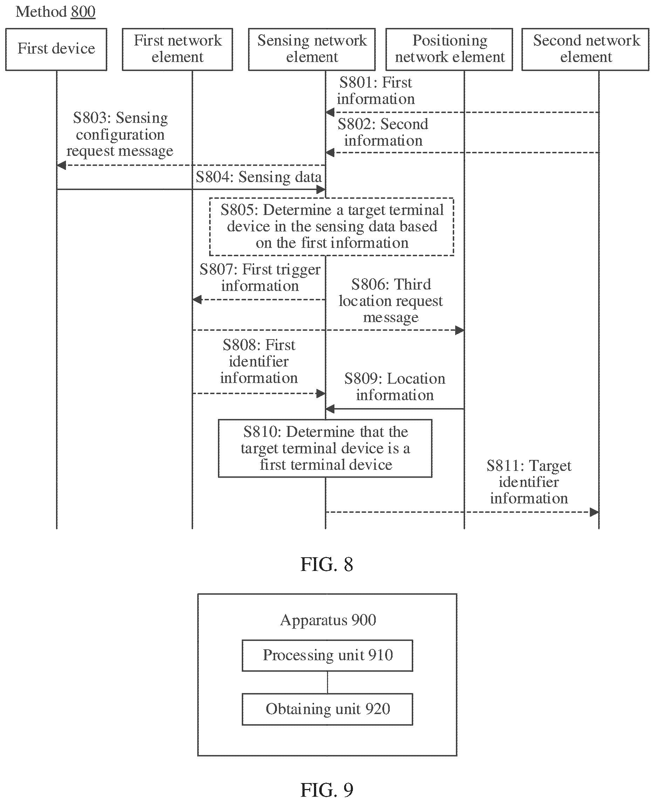

FIG. 8 shows a schematic flowchart of a wireless communication method 800 according to an embodiment of this application.

For S801 to S805, refer to the descriptions of steps S501 to S505 in the method 500. For brevity, details are not described herein again.

Optionally, in S806, a first network element sends a third location request message to a positioning network element, and correspondingly, the positioning network element receives the third location request message from the first network element.

The third location request message includes first identifier information of a first terminal device.

For example, the third location request message may include identifier information of at least one terminal device registered with the first network element, where the at least one terminal device registered with the first network element includes the first terminal device.

It should be understood that the first network element corresponds to a sensing area in which a first device performs sensing, and an area in which the at least one terminal device registered with the first network element is located includes the sensing area.

Optionally, the third location request message further indicates the positioning network element to send location information of the first terminal device to a sensing network element.

The first network element may actively send the third location request message to the positioning network element. For example, if the first network element determines, based on registration information of a terminal device, that the terminal device is a vehicle, the first network element may actively send the third location request message to the positioning network element. Alternatively, the first network element may send the third location request message to the positioning network element based on a trigger.

In a possible implementation, the first network element may send at least one third location request message to the positioning network element, where the at least one third location request message each includes first identifier information of the at least one terminal device, to separately request location information of the at least one terminal device.

Optionally, before step S806, the method 800 further includes step S807.

S807: The sensing network element sends first trigger information to the first network element, where the first trigger information is used to obtain the first identifier information.

For example, the first network element receives the first trigger information, and sends the third location request message to the positioning network element based on the first trigger information. For example, the first trigger information may indicate at least one of the following information: a type of a target terminal device, a service type of the target terminal device, and a trigger condition of the target terminal device. Descriptions about the first trigger information are similar to the descriptions about the first trigger information in the method 300. For brevity, details are not described herein again.

Optionally, in S808, the first network element sends the first identifier information of the first terminal device to the sensing network element, and correspondingly, the sensing network element receives the first identifier information of the first terminal device from the first network element.

For example, the first network element may send a notification message to the sensing network element, to indicate that the first network element sends the third location request message to the positioning network element, where the notification message includes the identifier information of the at least one terminal device registered with the first network element. Optionally, in S809, the positioning network element sends the location information of the first terminal device to the sensing network element, and correspondingly, the sensing network element receives the location information of the first terminal device from the positioning network element.

For example, the positioning network element initiates a positioning procedure of the at least one terminal device in the third location request message based on the third location request message, to obtain the location information of the at least one terminal device, where the location information of the at least one terminal device includes the location information of the first terminal device.

For another example, when the first network element sends at least one third location request message to the positioning network element, the positioning network element may send at least one piece of location information to the first network element in response to each third location request message.

The positioning network element may form a list of the obtained location information and the corresponding identifier information of the at least one terminal device, and sends the list to the sensing network element.

Alternatively, when the first network element sends the notification message to the sensing network element, if a sequence of the identifier information of the at least one terminal device in the notification message corresponds to the identifier information of the at least one terminal device in the third location request message, the positioning network element may alternatively return the location information of the at least one terminal device to the sensing network element based on a sequence of the identifier information of the at least one terminal device in the third location request message, and the sensing network element associates the identifier information of each terminal device with the location information of each terminal device according to a preset rule.

S810: The sensing network element determines, based on sensing data, the location information, and the first identifier information, that the target terminal device in the sensing data is the first terminal device.

Descriptions of determining, by the sensing network element, that the target terminal device is the first terminal device are similar to the descriptions in the method 500. For brevity, details are not described herein again.

Optionally, in S811, the sensing network element sends target identifier information of the target terminal device to a second network element, and correspondingly, the second network element receives the target identifier information of the target terminal device from the sensing network element.

Descriptions of a manner of sending the target identifier information to the second network element by the sensing network element are similar to the descriptions in step S512 in the method 500. For brevity, details are not described herein again.

In this way, in this application, the sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that the target identifier information of the target terminal device is the identifier information corresponding to the feature information. In other words, terminal device identity information of a sensed object is obtained. This increases a sensing dimension of a sensing system, and can enable the sensing system to support more sensing applications.

FIG. 9 to FIG. 11 each are a diagram of a structure of a possible communication apparatus according to an embodiment of this application. These communication apparatuses may be configured to implement functions of the sensing network element, the first network element, and the positioning network element in the foregoing method embodiments, and therefore can also achieve beneficial effects of the foregoing method embodiments. In this embodiment of this application, the communication apparatus may be a sensing network element, a first network element, and a positioning network element, or may be a module (for example, a chip) used in the sensing network element, the first network element, and the positioning network element.

As shown in FIG. 9, a communication apparatus 900 includes a processing unit 910 and an obtaining unit 920. The communication apparatus 900 is configured to implement functions of the sensing network element in the method embodiments shown in FIG. 3 and FIG. 5 to FIG. 8. Alternatively, a communication apparatus 400 may include a module configured to implement any function or operation of the sensing network element in the method embodiments shown in FIG. 3 and FIG. 5 to FIG. 8. The module may be completely or partially implemented by using software, hardware, firmware, or any combination thereof.

When the communication apparatus 900 is configured to implement the function of the sensing network element in the method embodiment shown in FIG. 3, the obtaining unit 920 is configured to obtain sensing data, is further configured to obtain first feature information of a first terminal device, and is further configured to obtain first identifier information of the first terminal device. The processing unit 910 is configured to determine, based on the sensing data, the first feature information, and the first identifier information, that a target terminal device in the sensing data is the first terminal device.

In this way, in this application, the sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that target identifier information of the target terminal device is the identifier information corresponding to the feature information. In other words, terminal device identity information of a sensed object is obtained. This increases a sensing dimension of a sensing system, and can enable the sensing system to support more sensing applications. For more detailed descriptions of the processing unit 910 and the obtaining unit 920, directly refer to the related descriptions in the method embodiment shown in FIG. 3. Details are not described herein again.

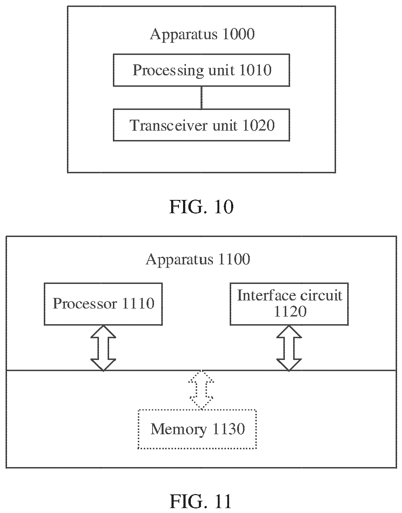

As shown in FIG. 10, a communication apparatus 1000 includes a processing unit 1010 and a transceiver unit 1020. The communication apparatus 1000 is configured to implement functions of the first network element or the positioning network element in the method embodiments shown in FIG. 3 and FIG. 5 to FIG. 8. Alternatively, the communication apparatus 1000 may include a module configured to implement any function or operation of the first network element or the positioning network element in the method embodiments shown in FIG. 3 and FIG. 5 to FIG. 8. The module may be completely or partially implemented by using software, hardware, firmware, or any combination thereof.

When the communication apparatus 1000 is configured to implement the function of the positioning network element in the method embodiment shown in FIG. 3, the processing unit 1010 is configured to determine location information of a first terminal device, and the transceiver unit 1020 is configured to send the location information, where the location information is used to determine that the first terminal device is a target terminal device in sensing data.

When the communication apparatus 1000 is configured to implement the function of the first network element in the method embodiment shown in FIG. 3, the processing unit 1010 is configured to determine first identifier information of a first terminal device, and the transceiver unit 1020 is configured to send the first identifier information, where the first identifier information is used to determine that the first terminal device is a target terminal device in sensing data.

In this way, in this application, a sensing network element may obtain identifier information and feature information of a related terminal device via another network element. Because the identifier information of the terminal device is associated with the feature information of the terminal device, the sensing network element may determine that the target terminal device in the sensing data matches the feature information, and further determine that target identifier information of the target terminal device is the identifier information corresponding to the feature information. In other words, terminal device identity information of a sensed object is obtained. This increases a sensing dimension of a sensing system, and can enable the sensing system to support more sensing applications.

For more detailed descriptions of the processing unit 1010 and the transceiver unit 1020, directly refer to the related descriptions in the method embodiment shown in FIG. 3. Details are not described herein again.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130 for storing instructions executed by the processor 1110, input data needed by the processor 1110 to run the instructions, or data generated after the processor 1110 runs the instructions.

When the communication apparatus 1100 is configured to implement the method shown in FIG. 3, the processor 1110 is configured to implement a function of the processing unit 910, the processing unit 1010, or the obtaining unit 920, and the interface circuit 1120 is configured to implement a function of a transceiver unit 920, the transceiver unit 1020, or the obtaining unit 920.

When the communication apparatus 1100 is configured to implement the method shown in FIG. 3, the communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130 for storing instructions executed by the processor 1110, input data needed by the processor 1110 to run the instructions, or data generated after the processor 1110 runs the instructions.

When the communication apparatus 1100 is configured to implement the method shown in FIG. 3, the processor 1110 is configured to implement a function of the processing unit 910, the processing unit 1010, or the obtaining unit 920, and the interface circuit 1120 is configured to implement a function of a transceiver unit 920, the transceiver unit 1020, or the obtaining unit 920.

When the foregoing communication apparatus is a chip used in a sensing network element, the chip in the sensing network element implements a function of the sensing network element in the foregoing method embodiments. The chip in the sensing network element receives information from another module (for example, a radio frequency module or an antenna) in the sensing network element, where the information is sent by a first network element, a positioning network element, or another network element to the sensing network element. Alternatively, the chip in the sensing network element sends information to another module (for example, a radio frequency module or an antenna) in a first network element, a positioning network element, or another network element, where the information is sent by the sensing network element to the first network element, the positioning network element, or the another network element.

When the foregoing communication apparatus is a chip used in a first network element, the chip in the first network element implements a function of the first network element in the foregoing method embodiments. The chip in the first network element receives information from another module (for example, a radio frequency module or an antenna) in the first network element, where the information is sent by a sensing network element, a positioning network element, or another network element to the first network element. Alternatively, the chip in first network element sends information to another module (for example, a radio frequency module or an antenna) in a sensing network element, a positioning network element, or another network element, where the information is sent by the first network element to the sensing network element, the positioning network element, or the another network element.

When the foregoing communication apparatus is a chip used in a positioning network element, the chip in the positioning network element implements a function of the positioning network element in the foregoing method embodiments. The chip in the positioning network element receives information from another module (for example, a radio frequency module or an antenna) in the positioning network element, where the information is sent by a sensing network element, a first network element, or another network element to the positioning network element. Alternatively, the chip in the positioning network element sends information to another module (for example, a radio frequency module or an antenna) in a sensing network element, a first network element, or another network element, where the information is sent by the positioning network element to the sensing network element, the first network element, or the another network element.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, a terminal device, or another programmable apparatus. The computer programs or instructions may be stored in a computer-readable storage medium, or transmission of the computer programs or instructions may be performed through the computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", ... are merely used to distinguish between different targets, for example, to distinguish between different network devices, and constitute no limitation on the scope of embodiments of this application. Embodiments of this application are not limited thereto.

It should be further understood that, in this application, both "when..." and "if" mean that a network element performs corresponding processing in an objective situation, and are not intended to limit time. The terms do not mean that the network element is required to have a determining action during implementation, and do not mean that there is another limitation.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated targets and represents that three relationships may exist. For example, A and/or B may represent the following three cases: Only A exists, both A and B exist, and only B exists. In addition, the character "/" in this specification usually indicates an "or" relationship between the associated targets.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A wireless communication method, wherein the method comprises:
obtaining, by a sensing network element, sensing data;
obtaining, by the sensing network element, first feature information of a first terminal device;
obtaining, by the sensing network element, first identifier information of the first terminal device; and
determining, by the sensing network element based on the sensing data, the first feature information, and the first identifier information, that a target terminal device in the sensing data is the first terminal device.

2. The method according to claim 1, wherein the first feature information is used to match the first terminal device.

3. The method according to claim 1 or 2, wherein the first feature information is location information of the first terminal device, and the obtaining, by the sensing network element, first feature information comprises:
receiving, by the sensing network element, the location information from a positioning network element.

4. The method according to claim 3, wherein before the receiving, by the sensing network element, the location information from a positioning network element, the method further comprises:
sending, by the sensing network element, a first location request message to the positioning network element, wherein the first location request message comprises the first identifier information of the first terminal device; or
sending, by the sensing network element, a first location request message to the positioning network element, wherein the first location request message comprises first area information, and the first area information corresponds to the target terminal device; or
sending, by the sensing network element, a first location request message to the positioning network element, wherein the first location request message comprises area identifier information corresponding to first area information, and the area identifier information comprises at least one of the following information: a tracking area TA identifier corresponding to the first area information, an access network identifier corresponding to the first area information, a cell identifier corresponding to the first area information, and an access and mobility management function AMF network element identifier corresponding to the first area information.

5. The method according to claim 4, wherein the obtaining, by the sensing network element, first identifier information comprises:
receiving, by the sensing network element, the first identifier information from a first network element.

6. The method according to claim 5, wherein before the receiving, by the sensing network element, the first identifier information from a first network element, the method further comprises:
sending, by the sensing network element, a first identifier request message to the first network element, wherein the first identifier request message comprises the first area information or the area identifier information.

7. The method according to claim 5 or 6, wherein before the receiving, by the sensing network element, the first identifier information from a first network element, the method further comprises:
sending, by the sensing network element, first trigger information to the first network element, wherein the first trigger information is used to obtain the first identifier information.

8. The method according to claim 7, wherein the first trigger information comprises at least one of the following information: a type of the target terminal device, a service type of the target terminal device, and a trigger condition of the target terminal device.

9. The method according to claim 1 or 2, wherein the first feature information is location information of the first terminal device, and the obtaining, by the sensing network element, first feature information and the obtaining, by the sensing network element, first identifier information of the first terminal device comprise:
receiving, by the sensing network element, the location information and the first identifier information from a first network element.

10. The method according to claim 9, wherein before the receiving, by the sensing network element, the location information and the first identifier information from a first network element, the method further comprises:
sending, by the sensing network element, a second location request message to the first network element, wherein the second location request message comprises first area information, and the first area information corresponds to the target terminal device; or
sending, by the sensing network element, a second location request message to the first network element, wherein the second location request message comprises area identifier information corresponding to first area information, and the area identifier information comprises at least one of the following information: a TA identifier corresponding to the first area information, an access network identifier corresponding to the first area information, and a cell identifier corresponding to the first area information.

11. The method according to claim 9 or 10, wherein before the receiving, by the sensing network element, the location information and the first identifier information from a first network element, the method further comprises:
sending, by the sensing network element, second trigger information to the first network element, wherein the second trigger information is used to obtain the first identifier information and the location information.

12. The method according to claim 11, wherein the second trigger information comprises at least one of the following information: a type of the target terminal device, a service type of the target terminal device, and a trigger condition of the target terminal device.

13. The method according to any one of claims 1 to 12, wherein the sensing data comprises sensing data of a first area, and the first area is an area indicated by first area information.

14. The method according to any one of claims 1 to 13, wherein the method further comprises:
receiving, by the sensing network element, first information from a second network element;
obtaining, by the sensing network element, the first identifier information of the target terminal device in the sensing data based on the first information; and
sending, by the sensing network element, the sensing data and the first identifier information of the target terminal device to the second network element.

15. The method according to claim 14, wherein the first information comprises at least one of the following information: a device type of the target terminal device, a service type of the target terminal device, a trigger condition of the terminal device, and first area information.

16. The method according to claim 14 or 15, wherein the method further comprises:
receiving, by the sensing network element, second information from the second network element, wherein the second information indicates the sensing network element to determine the target terminal device.

17. The method according to claim 1 or 2, wherein the first feature information comprises at least one of the following information: location information of the first terminal device, speed information of the first terminal device, a movement direction of the first terminal device, a movement track of the first terminal device, and appearance information of the first terminal device.

18. A wireless communication method, wherein the method comprises:
determining, by a positioning network element, location information of a first terminal device; and
sending, by the positioning network element, the location information, wherein the location information is used to determine that the first terminal device is a target terminal device in sensing data.

19. The method according to claim 18, wherein before the determining, by a positioning network element, location information, the method further comprises:
receiving, by the positioning network element, a first location request message from a sensing network element, wherein the first location request message comprises first identifier information of the first terminal device; or
receiving, by the positioning network element, a first location request message from a sensing network element, wherein the first location request message comprises first area information, and the first area information corresponds to the target terminal device; or
receiving, by the positioning network element, a first location request message from a sensing network element, wherein the first location request message comprises area identifier information corresponding to first area information, and the area identifier information comprises at least one of the following information: a tracking area TA identifier corresponding to the first area information, an access network identifier corresponding to the first area information, a cell identifier corresponding to the first area information, and an access and mobility management function AMF network element identifier corresponding to the first area information.

20. The method according to claim 19, wherein when the positioning network element receives the first location request message from the sensing network element and the first location request message comprises the first area information, or when the positioning network element receives the first location request message from the sensing network element and the first location request message comprises the area identifier information, the method further comprises:
sending, by the positioning network element, a second identifier request message to a first network element based on the first location request message, wherein the second identifier request message comprises the first area information; or sending, by the positioning network element, a second identifier request message to a first network element based on the first location request message, wherein the second identifier request message comprises the area identifier information;
receiving, by the positioning network element, the first identifier information from the first network element; and
determining, by the positioning network element, the location information based on the first identifier information.

21. The method according to claim 18, wherein before the determining, by a positioning network element, location information, the method further comprises:
receiving, by the positioning network element, a first location request message from a first network element, wherein the first location request message comprises first identifier information of the first terminal device; and
determining, by the positioning network element, the location information based on the first identifier information.

22. A wireless communication method, wherein the method comprises:
determining, by a first network element, first identifier information of a first terminal device; and
sending, by the first network element, the first identifier information, wherein the first identifier information is used to determine that the first terminal device is a target terminal device in sensing data.

23. The method according to claim 22, wherein before the determining, by a first network element, first identifier information, the method further comprises:
receiving, by the first network element, a first identifier request message from a sensing network element, wherein the first identifier request message comprises first area information, and the first area information corresponds to the target terminal device; or
receiving, by the first network element, a first identifier request message from a sensing network element, wherein the first identifier request message comprises area identifier information corresponding to first area information, and the area identifier information comprises at least one of the following information: a tracking area TA identifier corresponding to the first area information, an access network identifier corresponding to the first area information, a cell identifier corresponding to the first area information, and an access and mobility management function AMF identifier.

24. The method according to claim 22 or 23, wherein before the determining, by a first network element, first identifier information, the method further comprises:
receiving, by the first network element, first trigger information from the sensing network element, wherein the first trigger information is used to obtain the first identifier information.

25. The method according to claim 24, wherein the first trigger information comprises at least one of the following information: a type of the target terminal device, a service type of the target terminal device, and a trigger condition of the target terminal device.

26. The method according to claim 22, wherein before the determining, by a first network element, first identifier information, the method further comprises:
receiving, by the first network element, a second location request message from a sensing network element, wherein the second location request message comprises first area information, and the first area information corresponds to the target terminal device; or
receiving, by the first network element, a second location request message from a sensing network element, wherein the second location request message comprises area identifier information corresponding to first area information, and the area identifier information comprises at least one of the following information: a tracking area TA identifier corresponding to the first area information, an access network identifier corresponding to the first area information, and a cell identifier corresponding to the first area information.

27. The method according to claim 22 or 26, wherein before the determining, by a first network element, first identifier information, the method further comprises:
receiving, by the first network element, second trigger information from the sensing network element, wherein the second trigger information is used to obtain the first identifier information and location information.

28. The method according to claim 27, wherein the second trigger information comprises at least one of the following information: a type of the target terminal device, a service type of the target terminal device, and a trigger condition of the target terminal device.

29. The method according to any one of claims 26 to 28, wherein the method further comprises:
sending, by the first network element, a third location request message to a positioning network element, wherein the third location request message comprises the first identifier information;
receiving, by the first network element, location information of the first terminal device from the positioning network element; and
sending, by the first network element, the location information to the sensing network element.

30. A wireless communication apparatus, comprising a unit configured to perform the method according to any one of claims 1 to 17.

31. A wireless communication apparatus, comprising a unit configured to perform the method according to any one of claims 18 to 21.

32. A wireless communication apparatus, comprising a unit configured to perform the method according to any one of claims 22 to 29.

33. A communication apparatus, comprising a processor, wherein the processor is coupled to a memory, the memory is configured to store a computer program or instructions, and the processor is configured to execute the computer program or the instructions, to implement the method according to any one of claims 1 to 17, 18 to 21, or 22 to 29.

34. A computer-readable storage medium, comprising a computer program, wherein when the computer program is run on a computer, the computer is enabled to perform the method according to any one of claims 1 to 17, 18 to 21, or 22 to 29.

35. A computer program product, wherein when the computer program product runs on a computer, the computer is enabled to perform the method according to any one of claims 1 to 17, 18 to 21, or 22 to 29.

36. A chip system, comprising a processor, configured to invoke a computer program from a memory and run the computer program, to enable a communication device on which the chip system is installed to perform the method according to any one of claims 1 to 17, 18 to 21, or 22 to 29.

37. An information transmission system, comprising the apparatus according to claim 30, the apparatus according to claim 31, and the apparatus according to claim 32.
